(19) Europäisches Patentamt / European Patent Office / Office européen des brevets

(11) **EP 4 741 114 A1**

(12) **EUROPEAN PATENT APPLICATION**
published in accordance with Art. 153(4) EPC

(43) Date of publication:
**13.05.2026 Bulletin 2026/20**

(21) Application number: **24835933.3**

(22) Date of filing: **21.06.2024**

(51) International Patent Classification (IPC):
**B25J 9/22** (2006.01)   **G05B 19/42** (2006.01)
**G05B 19/4155** (2006.01)

(52) Cooperative Patent Classification (CPC):
**B25J 9/1656; G05B 19/4155; G05B 19/42**

(86) International application number:
**PCT/JP2024/022660**

(87) International publication number:
**WO 2025/009420 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.07.2023 JP 2023110784**

(71) Applicant: **Panasonic Intellectual Property Management Co., Ltd.
Kadoma-shi, Osaka 571-0057 (JP)**

(72) Inventor: **OKUMURA, Ryo
Kadoma-shi, Osaka 571-0057 (JP)**

(74) Representative: **Grünecker Patent- und Rechtsanwälte
PartG mbB
Leopoldstraße 4
80802 München (DE)**

(54) **CONTROL DEVICE, INFORMATION PROCESSING DEVICE, AND METHOD**

(57)    A control device for causing a robot to perform a predetermined operation, includes: a communication interface configured to perform data communication with an external device; and a controller configured to control the robot by data communication via the communication interface. A plurality of partial trajectories segmenting a trajectory are set, the trajectory representing motion of the robot during the predetermined operation. The plurality of partial trajectories include a first partial trajectory and a second partial trajectory adjacent to each other in the trajectory. The first partial trajectory and the second partial trajectory include an overlapping portion where the first partial trajectory and the second partial trajectory overlap with each other, a first individual portion only belonging to the first partial trajectory, and a second individual portion only belonging to the second partial trajectory. The controller is configured to cause the robot to perform the predetermined operation in the overlapping portion in accordance with both of the first partial trajectory and the second partial trajectory.

Fig. 6

**Description**

TECHNICAL FIELD

The present disclosure relates to a control device and a method for causing a robot to perform a predetermined operation, and an information processing device and a method for controlling machine learning causing a robot to perform a predetermined operation.

BACKGROUND ART

WO 2016/103307 A discloses a method for generating an operation program for a dual-arm robot. This method specifies, with a user input using a GUI, a variable for a template element operation program for causing a robot to perform each element work forming the whole work of the robot. The template element operation program is configured to include, as variables, one or more finger position coordinates (teaching points) specifying a robot motion (position changing and orientation changing) required for the element operation, and specify the robot motion by specifying the all finger position coordinates. Thus, by merely specifying the parameters of the template element operation program by using the GUI, a teacher who teaches a motion to the robot can generate a motion program that relates to movements/motions and that contains hand end position coordinates of the robot.

Patent Document

Patent Document 1: WO 2016/103307 A

Non-Patent Document

Non-Patent Document 1: G. Franzese, A. Meszaros, L. Peternel and J. Kober, "ILoSA: Interactive learning of stiffness and attractors," in IROS, 2021.

SUMMARY

The present disclosure provides a control device, an information processing device, and a method that can facilitate operating a robot accurately.

A control device according to one aspect of the present disclosure causes a robot to perform a predetermined operation. The control device includes a communication interface that performs data communication with an external device, and a controller that controls the robot by data communication via the communication interface. A plurality of partial trajectories segmenting a trajectory are set, the trajectory representing motion of the robot during the predetermined operation. The plurality of partial trajectories include a first partial trajectory and a second partial trajectory adjacent to each other in the trajectory. The first partial trajectory and the second partial trajectory include: an overlapping portion where the first partial trajectory and the second partial trajectory overlap with each other; a first individual portion only belonging to the first partial trajectory; and a second individual portion only belonging to the second partial trajectory. The controller causes the robot to perform the predetermined operation in the overlapping portion in accordance with both of the first partial trajectory and the second partial trajectory.

An information processing device according to an aspect of the present disclosure controls machine learning for causing a robot to perform a predetermined operation. The information processing device includes a display that displays information, an input interface that receives a user operation, a controller that controls the display and the input interface. The controller causes the display to display a trajectory representing motion of the robot during the predetermined operation. The controller causes the input interface to receive the user operation on the trajectory being displayed on the display to set a plurality of partial trajectories that segment the trajectory. The controller controls the machine learning to cause the robot to perform the predetermined operation for each of the plurality of partial trajectories, in accordance with set partial trajectories based on the user operation. The set partial trajectories, as the plurality of partial trajectories that segment the trajectory, have an overlapping portion between partial trajectories that are adjacent to each other in the trajectory.

These general and specific aspects may be implemented as a system, a method, and a computer program, and a combination thereof.

With the control device, the information processing device, and the method according to the present disclosure, it is possible to facilitate operating the robot accurately.

BRIEF DESCRIPTION OF DRAWINGS

Fig. 1 is a diagram for explaining an outline of a control system according to a first embodiment;

Fig. 2 is a block diagram illustrating a configuration of a robot, a robot control device, and a terminal device in the control system;

Figs. 3A and 3B are diagrams for explaining a problem in training of a control model using a trajectory of the robot;

Fig. 4 is a diagram for explaining an operation of the control system;

Fig. 5 is a sequence diagram illustrating an entire operation of the control system;

Fig. 6 is a flowchart illustrating trajectory segmentation processing in the terminal device according to the first embodiment;

Figs. 7A and 7B are diagrams illustrating an example of display for the trajectory segmentation processing in the terminal device according to the first embodiment;

Figs. 8A and 8B are diagrams illustrating an example of extending an overlapping portion of partial trajectories in the trajectory segmentation processing;

Fig. 9 is a diagram for explaining a relationship between a correction term of a control model and a trajectory segmentation;

Fig. 10 is a flowchart illustrating processing performed by a trained control model;

Fig. 11 is a diagram illustrating an example of display for the trajectory segmentation processing in the terminal device according to a second embodiment; and

Fig. 12 is a flowchart illustrating the trajectory segmentation processing in the terminal device according to the second embodiment.

DETAILED DESCRIPTION

Some embodiments will now be explained in detail, with reference to drawings as appropriate. However, descriptions more in detail than necessary may be omitted. For example, detailed descriptions of well-known matters and redundant descriptions of substantially the same configurations may be omitted. This is to avoid unnecessary redundancy of the following description, and to facilitate understanding of those skilled in the art.

Note that the applicant provides the accompanying drawings and the following description to facilitate those skilled in the art to fully understand the present disclosure, and the accompanying drawings and the following description are not intended to limit the subject matter defined in the claims in any way.

(First Embodiment)

In the first embodiment, a robot control system will be described as an example of using an information processing device according to the present disclosure.

1. Configuration

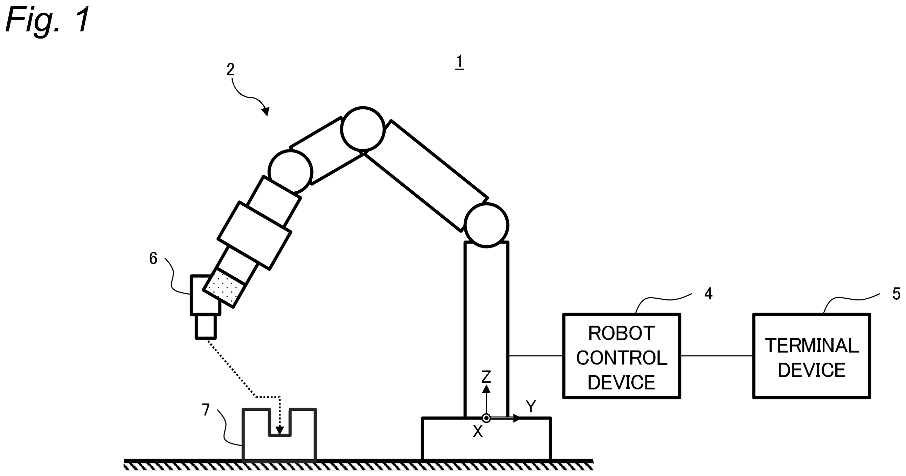

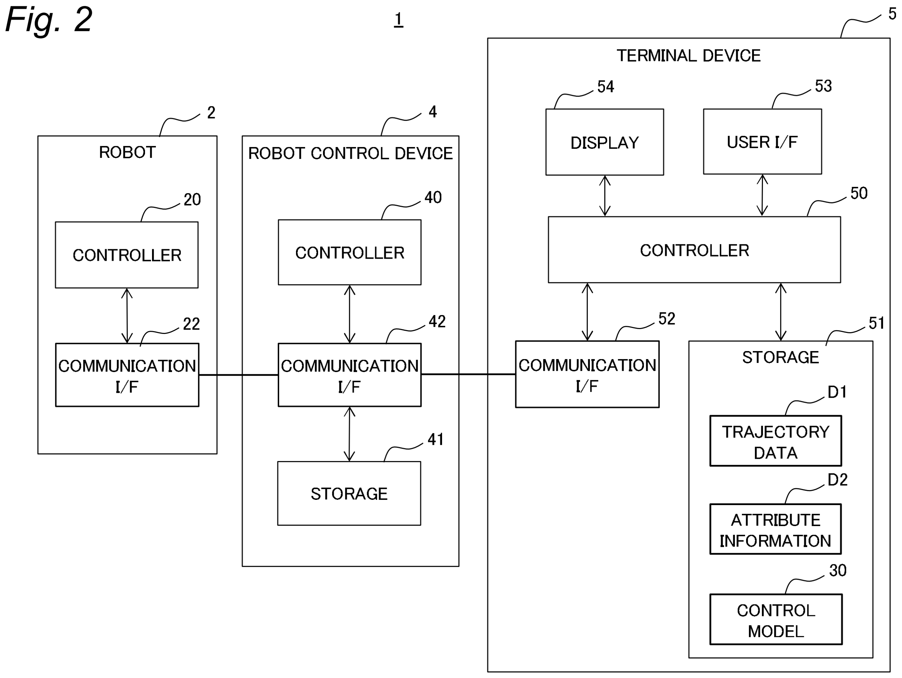

A configuration of the control system according to the first embodiment will now be described with reference to Figs. 1 and 2.

1-1. Outline of Control System

Fig. 1 is a diagram for explaining an outline of the control system 1 according to the present embodiment. The control system 1 according to the present embodiment includes a robot 2, a robot control device 4, and a terminal device 5. In the system 1, the robot 2, the robot control device 4, and the terminal device 5 are data-communicably connected to one another.

The system 1 is used for controlling an operation of the robot 2 on the basis of a control command transmitted from the robot control device 4, for example. The robot 2 operates, in response to the control command, by driving a manipulator including a plurality of joints, for example. In the example in Fig. 1, the robot 2 performs an operation of moving a connector 6 with an USB terminal, and inserting the connector 6 into a socket 7. Such an operation of the robot 2 is an example of a predetermined operation in the present embodiment.

In the system 1, a control model of the robot 2 is trained using machine learning via direct teaching by a user, for example, to train the robot 2 with a pre-designed operation, such as that described above. The control model outputs the control command for causing the robot 2 to operate, on the basis of positions within a space where the robot 2 operates.

The system 1 displays a graphical user interface (GUI) used for the machine learning of such a control model in the terminal device 5.

1-2. Configuration of Robot, Robot Control Device, and Terminal Device

Configurations of the robot 2, the robot control device 4, and the terminal device 5 in the system 1 will now be described with reference to Fig. 2. Fig. 2 is a block diagram illustrating configurations of the robot 2, the robot control device 4, and the terminal device 5 in the control system 1.

As illustrated in Fig. 2, for example, the robot 2 includes a controller 20 and a communication interface 22. Hereinafter, the interface is abbreviated as an "I/F". The controller 20 is implemented as a processor of various types, e.g., as a CPU, and controls an entire operation of the robot 2.

The communication I/F 22 is a circuit for performing data communication in accordance with a predetermined communication protocol. Examples of the predetermined communication protocol include USB, IEEE 1395, IEEE 802.3, IEEE 802.11a/11b/11g/11ac, WiFi (registered trademark), and Bluetooth (registered trademark). In other words, the communication I/F 22 may include a connection terminal for connecting to an external device, and may communicate with the external device over a communication network, or directly. The communication I/F 22 may include a plurality of circuits.

The controller 20 in the robot 2 receives the control command from the robot control device 4 via the communication I/F 22, and drives each joint of the manipulator on the basis of the control command. The robot 2 also includes a driving device such as a motor that drives each joint. The robot 2 may also include a sensor that detects a displacement such as a rotation angle of each joint, for example. For example, the controller 20 may calculate, on the basis of displacements that are sequentially detected during the execution of direct teaching or the like, coordinate data indicating coordinates corresponding to a position or a posture at which a tip end of the manipulator operates, that is, arm-tip coordinates, and cause the communication I/F 22 to transmit the coordinate data to an external device such as the robot control device 4. The arm-tip coordinates are represented by a coordinate system with reference to a base where the manipulator is fixed, as illustrated in Fig. 1, in the robot 2, for example.

The robot control device 4 includes a controller 40, a storage 41, and a communication I/F 42. The controller 40 is implemented as a processor of various types, e.g., as a CPU, and implements a predetermined function such as that for controlling the communication I/F 42, by executing a program (software) stored in the storage 41, for example. The storage 41 is a storage medium that stores therein the program and the like, and includes a nonvolatile semiconductor memory, for example. The storage 41 may include a RAM such as a DRAM or an SRAM, and may function as a working memory of the controller 40. The communication I/F 42 is a circuit for performing data communication in accordance with a predetermined communication protocol, in the same manner as the communication I/F 22 of the robot 2, for example.

The terminal device 5 includes a controller 50, a storage 51, a communication I/F 52, a user I/F 53, and a display 54. The terminal device 5 is implemented as an information processing device such as a personal computer (PC).

The controller 50 includes a CPU, and implements a predetermined function of the terminal device 5 by causing the CPU to execute a program (software), for example. The controller 50 may include, instead of the CPU, a processor configured as a dedicated electronic circuit designed to implement a predetermined function. In other words, the controller 50 may be implemented using a processor of various types, such as a CPU, an MPU, a GPU, a DSU, an FPGA, or an ASIC. The controller 50 may include one or more processors.

The storage 51 is a storage medium that stores therein programs and data required for implementing the functions of the terminal device 5, and is configured as an HDD or an SSD, for example. For example, in addition to the program described above, the storage 51 stores therein a control model 30 that outputs a control command to the robot 2, trajectory data D1 and attribute information D2 used in the machine learning of the control model 30, and the like. The program mentioned above may be provided via a communication network such as the Internet, or may be stored in a portable recording medium.

Furthermore, the storage 51 may include a RAM such as a DRAM or an SRAM, for example, and may function as a buffer memory for temporarily storing (i.e., retaining) data. The storage 51 may function as a working area of the controller 50, and may include a storage area of an internal memory of the controller 50.

The communication I/F 52 is a circuit for performing data communication in accordance with a predetermined communication protocol, in the same manner as the communication I/F 42 of the robot control device 4, for example. In the terminal device 5, the communication I/F 52 may implement an acquisition interface that receives various types of information via communication with an external device, or an output interface that transmits various types of information.

The user I/F 53 is an umbrella term for operation members operated by a user. The user I/F 53 includes, for example, any one of a keyboard, a mouse, a trackpad, a touchpad, a button, and a switch, or a combination thereof. The user I/F 53 may form a touch panel with the display 54. The user I/F 53 acquires various types of information entered via a user operation. The user I/F 53 may include a connection terminal or the like to which an external operation member is connected, and may receive a remote control for the robot 2, via a joystick, a 3D mouse, a master arm of a master-slave system, and/or a VR controller, for example.

**EP 4 741 114 A1**

The display 54 includes, for example, a liquid crystal display or an organic EL display, and displays a GUI used for the machine learning of the control model 30. The display 54 may display various types of information such as various icons for operating the user I/F 53 and information entered via the user I/F 53.

In the above description, an example in which the control system 1 includes the robot control device 4 and the terminal device 5 is described, but the configuration of the control system 1 is not limited to the example described above. For example, the robot control device 4 may be integrated with the robot 2, or may be integrated with the terminal device 5. Furthermore, in the example described above, the control model 30 and the like are stored in the storage 51 of the terminal device 5, but may be stored in a storage device outside the terminal device 5.

2. Operations

Operations of the control system 1 and the terminal device 5 having the configurations described above will now be explained.

The control system 1 according to the present embodiment executes the machine learning of the control model 30 in the terminal device 5 so that the user causes the robot 2 to perform an intended operation, on the basis of a trajectory along which the robot 2 has moved in direct teaching or the like performed by the user.

For example, as illustrated in Fig. 1, the terminal device 5 in the system 1 acquires a trajectory of the robot 2 during an operation of inserting the connector 6 into the socket 7, from the robot 2, via the robot control device 4. Such a trajectory may be acquired, in addition to or instead of direct teaching, through interactive control, in which the user causes the robot 2 to operate finely adjusting the robot 2 by remote control, for example.

The terminal device 5 updates the control model 30, using the machine learning, every time a trajectory is acquired as a result of executing the operation of the robot 2 once or more, for example. The control model 30 according to the present embodiment is trained to sequentially output torque commands to a motor to cause the robot 2 to operate by impedance control, on the basis of the coordinates for each time along the trajectory within the space where the robot 2 operates, for example. The system 1 causes the robot 2 to operate, by inputting the current coordinates of the robot 2 to the trained control model 30 after the direct teaching is finished, for example, and causing the control model 30 to output the torque command corresponding to the current coordinates to the motor, as the control command.

2-1. Problem in Training of Control Model Using Trajectory

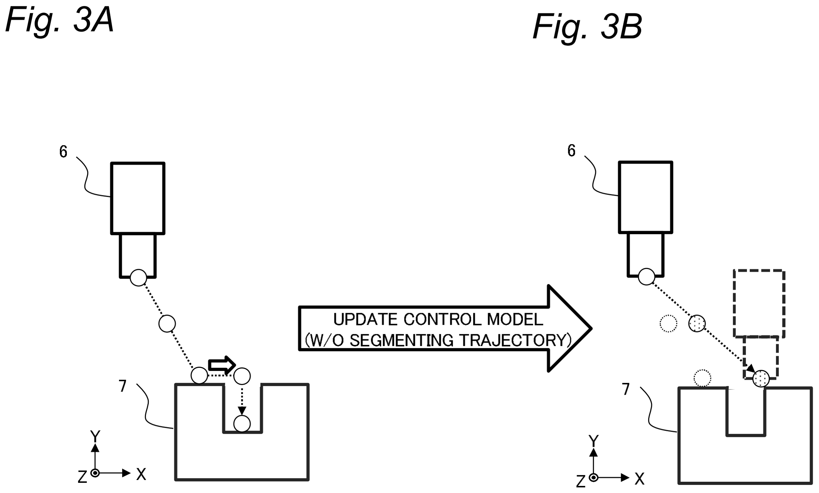

A problem in training of the above-described control model 30 will now be described with reference to Figs. 3A and 3B. Figs. 3A and 3B are diagrams for explaining a problem in training of the control model 30 using the trajectory of the robot.

Fig. 3A illustrates an example in which the robot 2 is caused to move the connector 6, similarly to the operation in the example of Fig. 1, via direct teaching or the like. This operation includes an approaching stage of bringing the connector 6 closer to the socket 7, a sliding stage of sliding the connector 6 that is in contact with the upper surface of the socket 7 toward a recess of the socket 7, and an inserting stage of inserting the connector 6 into the recess of the socket 7.

In the example illustrated in Fig. 3A, in the sliding stage, a force directed toward the right (i.e., in +X direction) in the drawing is applied to the robot 2, via direct teaching or the like, against the friction between the connector 6 and the socket 7 that are in contact with each other. Various stages during the operation, such as those described above, can be easily distinguished by the user who performs the direct teaching, but may not be distinguished in the machine learning using only the trajectory, and therefore, it would be difficult to achieve an accurate training result for the operation, for example.

Fig. 3B illustrates an example in which the control model 30 is updated using the unprocessed trajectory obtained in the example in Fig. 3A, and the robot 2 is caused to move the connector 6 in accordance with the control command from the control model 30. With the control model 30 updated without giving consideration to the stages of the operation, it may be difficult for the robot 2 to perform the operation correspondingly to each of such stages described above. For example, as illustrated in Fig. 3B, it may be a problem that the operation of the approaching stage may be unintentionally changed, even when the user intends to change the sliding stage, and a landing point of the connector 6 in the approaching stage may be offset in the +X direction, beyond the recess of the socket 7.

Therefore, the control system 1 according to the present embodiment divides the trajectory, which is obtained by direct teaching or the like, into segments on the basis of a user operation, the segments corresponding to the stages of the operation, and performs the machine learning of the control model 30 using the resultant trajectory segments. For example, the user can distinguish each stage of transition in the operation, from the trajectory of the robot 2. The terminal device 5 of the system 1 provides a GUI that facilitates training of the control model 30 allowing the robot 2 to operate accurately, by displaying the trajectory and receiving the user operation for dividing the trajectory into segments.

2-2. Outline of Operation

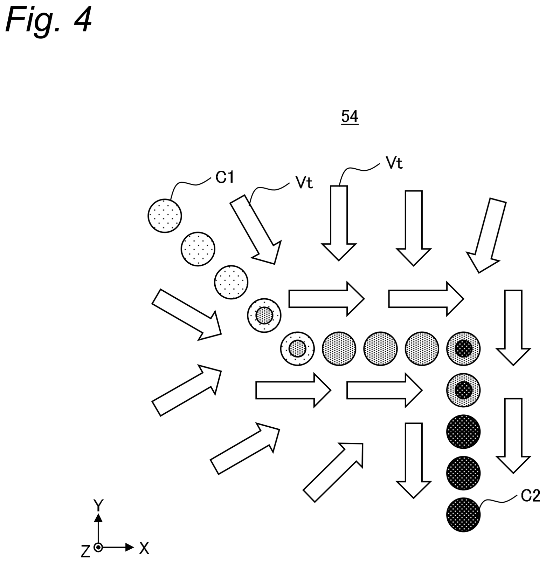

An outline of an operation of the control system 1 according to the present embodiment will now be described with reference to Fig. 4.

Fig. 4 is a diagram for explaining the operation of the control system 1. Fig. 4 illustrates an example in which the display 54 of the terminal device 5 is displaying segments resultant of dividing the trajectory from a start point C1 to an end point C2, the trajectory being obtained by causing the robot 2 to perform the similar operation to that illustrated in the example in Fig. 1.

The system 1 divides the trajectory from the start point C1 to the end point C2 into segments on the basis of the user operation on the terminal device 5, the segments respectively corresponding to the approaching stage, the sliding stage, and the inserting stage, between which the operation of the robot 2 changes in a relatively prominent way. In the example in Fig. 4, the terminal device 5 displays points each representing the coordinates along the trajectory in increments of time, in different manners corresponding to the respective segments. By updating the control model 30 using such segmented trajectories, it is possible to avoid the situation in which an operation corresponding to one segment of the trajectory is changed against an intention of the user to change the operation corresponding to another segment, such as that illustrated in Figs. 3A and 3B, for example.

In such segmentation of the trajectory, it is preferable to divide the trajectory into segments enabling these stages of the operation to transition gradually. When the stages of the operation change abruptly, the operation of the robot 2 may become unstable between the segments where the stages change, causing an excessive load to the joints, due to a sharp directional change, and may result in an execution of a protective stop function, for example.

Therefore, in the control system 1 according to the present embodiment, the terminal device 5 divides the entire trajectory, in response to the user operation, in such a manner that adjacent ones of the resultant trajectory segments have an overlapping portion. By executing the machine learning of the control model 30 using the trajectory segments having the overlapping portion, it is possible to control the robot 2 to gradually transition between the stages of the operation corresponding to the respective trajectory segments, in a cross-faded fashion. As described above, with the terminal device 5 of the system 1, it is possible to facilitate the training of the control model 30 allowing the robot 2 to operate accurately.

Furthermore, for example, the terminal device 5 according to the present embodiment displays arrows Vt in the area near the trajectory, as illustrated in Fig. 4, to visualize directions of motion of the robot 2, the motion being output from the control model 30. These arrows Vt indicate the directions to be followed by the robot 2 in accordance with a relative displacement from coordinates of an arbitrary position to next target coordinates output from the control model 30, in the space where the robot 2 operates. By presenting the arrows Vt indicating the directions of the motion to the user, the user can, for example, adjust the trajectory segments by checking the operation of the robot 2 controlled by the updated control model 30 based on the trajectory segments.

2-3. Overall Operation

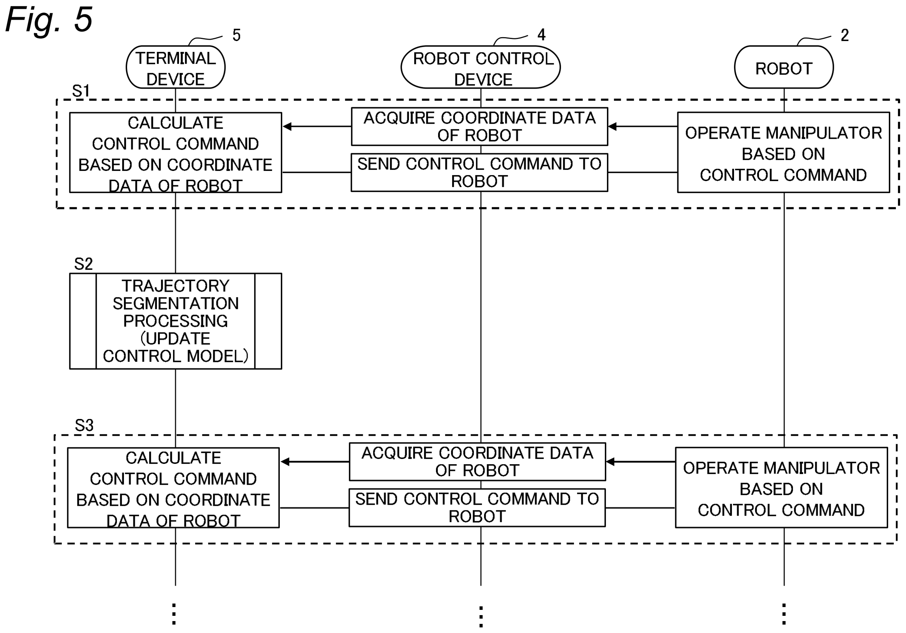

The overall operation of the control system 1 according to the present embodiment will now be described with reference to Fig. 5.

Fig. 5 is a sequence diagram illustrating the entire operation of the control system 1. The control system 1 acquires the coordinate data and the like obtained as a result of an operation of the robot 2, as the trajectory (S1). The control system 1 receives the user operation segmenting the trajectory, and updates the control model 30 using the machine learning with the resultant trajectory segments (S2). The system 1 calculates the control command from the coordinate data of the robot 2 using the control model 30 updated in such trajectory segmentation processing (S2), and causes the robot 2 to operate (S3).

In step S1, for example, causing the manipulator to operate by direct teaching, the robot 2 of the system 1 transmit the coordinate data indicating the arm-tip coordinates of the tip end of the manipulator to the robot control device 4. For example, the controller 20 of the robot 2 sequentially calculates the arm-tip coordinates by forward kinematics calculations that are based on the rotation angles of the respective joints in the operation of the manipulator, and transmits the arm-tip coordinates via the communication I/F 22. The robot control device 4 receives the coordinate data from the robot 2, and transmits the received coordinate data to the terminal device 5, by causing the controller 40 to control the communication I/F 42, for example.

The controller 50 of the terminal device 5 then inputs the coordinate data received from the robot control device 4 via the communication I/F 52, to the initialized control model 30, and calculates the control command for the robot 2, for example (S1). For example, before executing step S1, the control model 30 may be initialized by processing of initializing parameters or the like included in the control model 30, using predetermined initial values. In step S1, the robot control device 4 receives the calculated control command from the terminal device 5, and transmits the control command to the robot 2. The controller 20 of the robot 2 then causes the manipulator to operate, on the basis of the received control command.

In step S1, the above-described processing is repeated to accumulate the coordinate data sequentially received as the trajectory of the robot 2 and control commands calculated from the coordinate data, for example. The terminal device 5 associates the coordinate data obtained from the robot 2 operated by direct teaching or the like, with the action data representing the control command, for each point in time, and stores the associated data in the storage 51, as the trajectory data D1.

The terminal device 5 displays the trajectory on the basis of the collected trajectory data D1, and receives the user operation segmenting the trajectory (S2). On the basis of the trajectory data D1 divided into segments in accordance with the user operation, the terminal device 5 executes the machine learning of the control model 30 (S2). The process in step S2 will be described later in detail.

In step S3, for example, the system 1 causes the robot control device 4 to sequentially acquire current coordinate data of the robot 2, and causes the trained control model 30 to calculate the control command from the coordinate data, on the terminal device 5, in the same manner as in step S1. The robot 2 operates the manipulator on the basis of the control command received from the terminal device 5 via the robot control device 4. By repeating such processing, the system 1 causes the robot 2 to perform the operation which is learned by the training of the control model 30.

In the above operation, the processing in step S3 may be performed by the updated control model 30 resultant of performing the processing of steps S1 and S2 a plurality of times (e.g., three times), the updated control model 30 being trained on the basis of respective pieces of trajectory data D1 that are obtained from the plurality of operations.

2-4. Trajectory Segmentation Processing

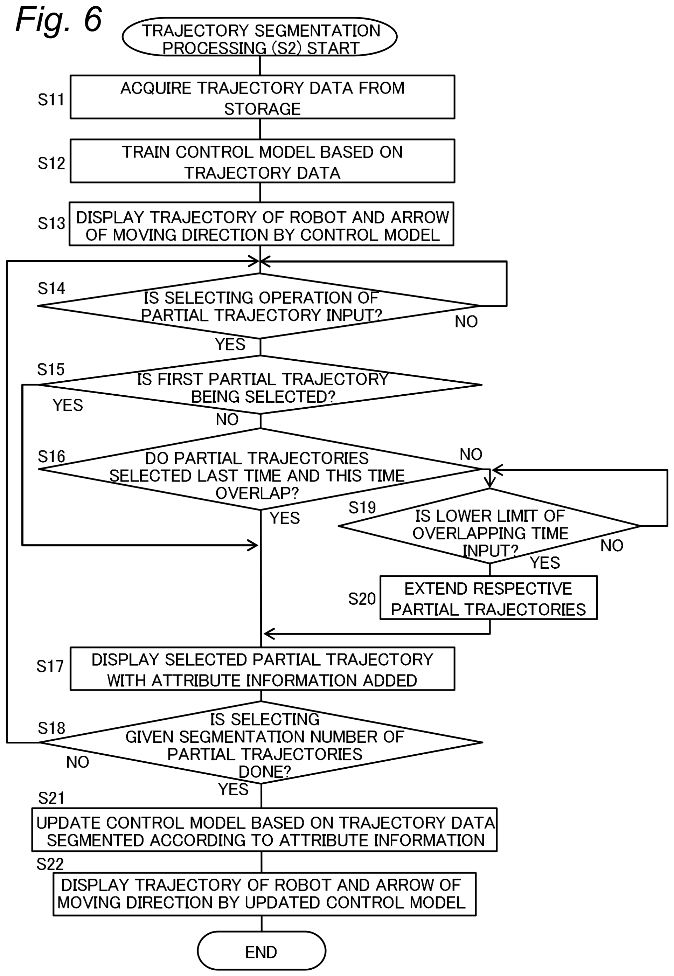

The processing in step S2 in Fig. 5 will now be described in detail with reference to Figs. 6 to 8.

Fig. 6 is a flowchart illustrating the trajectory segmentation processing (S2) performed on the terminal device 5 according to the present embodiment. The processing of this flowchart is executed by the controller 50, and is started after the trajectory data D1 obtained in step S1 in Fig. 5 is stored in the storage 51 of the terminal device 5. Hereinafter, the coordinates in the trajectory data D1 will be described with respect to two axes of an X axis and a Y axis, but the coordinates may be in three axes of X, Y, and Z, or six axes obtained by adding roll, pitch, and yaw to the three axes, for example.

To begin with, the controller 50 acquires the trajectory data D1 stored in the storage 51 (S11). The trajectory data D1 is time-series data, and includes the coordinate data $x(t) = (Xt, Yt)$ indicating the arm-tip coordinates of the robot 2 at a time $t$, and the action data $y(t) = (VXt, VYt)$. $Xt$ and $Yt$ are the X coordinate and the Y coordinate of the arm tip of the robot 2 at the time $t$, respectively, that is, the coordinates of the tip end of the manipulator. $VXt$ and $VYt$ are relative displacements of the arm-tip coordinates in the X-axis and Y-axis directions, respectively, between the time $t$ and a subsequent time $t + 1$.

The controller 50 performs training in the machine learning of the control model 30 on the basis of the acquired trajectory data D1 (S12). In step S12, the control model 30 is trained using an entire trajectory in the trajectory data D1, the entire trajectory being obtained as a result of a single operation of the robot 2.

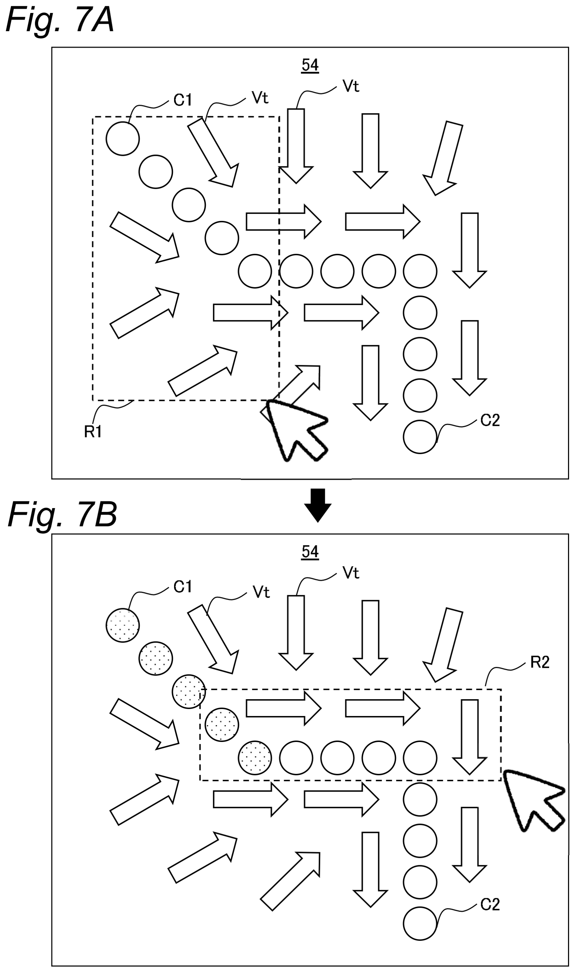

On the basis of the trajectory data D1, the controller 50 causes the display 54 to display the trajectory along which the robot 2 has operated, and arrows Vt representing the directions of the motion of the robot 2, the directions of the motion being obtained by the control model 30 (S13). Figs. 7A and 7B are diagrams illustrating an example of display for the trajectory segmentation processing (S2) in the terminal device 5 according to the present embodiment. The display 54 displays, as illustrated in Fig. 7A, for example, the trajectory from the start point C1 to the end point C2 during the operation of the robot 2, and arrows Vt representing the directions of the motion of the robot 2, output from the control model 30. Each of these arrows Vt represents the direction in which the robot 2 moves from coordinates of an arbitrary position near the trajectory, by the relative displacement between the times $t$ and $t + 1$.

The controller 50 determines whether a user operation selecting a part of the entire trajectory in the trajectory data D1, as a partial trajectory that is a segment of the trajectory, is input via the user I/F 53 (S14). Fig. 7A illustrates an example of a partial trajectory selected by such a user operation. For example, as illustrated in Fig. 7A, the controller 50 receives a user operation selecting a region R1 including the partial trajectory designated with the user I/F 53, such as a mouse. For example, the user can select a partial trajectory, from the trajectory between the start point C1 and the end point C2 being displayed on the display 54, in accordance with the changes in the operation of the robot 2, for example. When such a selecting operation is not input (NO in S14), the controller 50 repeats the determination in step S14 at a predetermined cycle, for example.

When the selecting operation of a partial trajectory is input (YES in S14), the controller 50 determines whether the selected partial trajectory is a first partial trajectory that is the first segment from the start point C1 in the trajectory (S15). The controller 50 may manage the number of partial trajectories that are divided as segments, using a counter or the like, in the internal memory, for example.

When the selected partial trajectory is the first segment (YES in S15), the controller 50 adds attribute information D2 indicating that the partial trajectory is the first segment to the partial trajectory, for example (S17). The attribute information D2 manages a predetermined discrete value for each of the partial trajectories in a manner that the discrete value is associated with a time period by a start time and an end time of the partial trajectory, so that the segmented partial trajectory is identified thereby, for example. The controller 50 updates the display on the display 54 on the basis of the attribute information D2 thus assigned (S17). For example, as illustrated in Fig. 7B, the controller 50 displays the partial trajectory selected by the region R1 in Fig. 7A and assigned with the attribute information D2, in a manner different from the other part of the trajectory. In the present embodiment, the display 54 displays the partial trajectory in a different color or a different design depending on the attribute information D2.

The controller 50 determines whether partial trajectories corresponding to a predetermined number of segments have been selected, by referring to the counter or the like in the internal memory, for example (S18). The number of segments may be set in advance on the basis of a user operation on the user I/F 53, or may be set as the number of partial trajectories selected until the end of segmentation according to a user operation instructing to end the trajectory segmentation, for example.

When partial trajectories corresponding to the predetermined number of segments have not been selected yet (NO in S18), the controller 50 determines whether the next selecting operation of a partial trajectory is input via the user I/F 53 (S14).

When the selecting operation of a partial trajectory is input (YES in S14) and the selected trajectory is not the first segment (NO in S15), the controller 50 determines whether there is the overlapping portion between the partial trajectory selected by this selecting operation and the partial trajectory selected by the previous selecting operation (S16). The overlapping portion indicates a period for which respective periods corresponding to two temporally continuous partial trajectories, that is, two adjacent partial trajectories overlap with each other in part, for example. For example, for two partial trajectories that are adjacent to each other, the controller 50 detects whether the two partial trajectories partially overlap with each other, that is, whether there is the overlapping portion between the two partial trajectories, on the basis of the periods corresponding to the respective partial trajectories selected by the user operations.

Fig. 7B illustrates an example in which, after the display is updated from the example in Fig. 7A in accordance with the assigned attribute information D2 (S17), a second partial trajectory is selected by a user operation selecting a region R2 (YES in S14, NO in S15). In the example in Fig. 7B, the region R2 is selected in such a manner that the first partial trajectory selected by the region R1 in Fig. 7A has the overlapping portion with the second partial trajectory.

When there is the overlapping portion (YES in S16), the controller 50 proceeds to step S17, and assigns a piece of attribute information D2 different from that of the first partial trajectory to the currently selected partial trajectory, and updates the display in accordance with the assigned attribute information D2.

When there is no overlapping portion (NO in S16), the controller 50 causes, for example, the display 54 to display a setting screen for setting a lower limit of an overlapping time representing the period of the overlapping portion, and determines whether a user operation inputting the lower limit is input on the screen via the user I/F 53 (S19). When the user operation is not input (NO in S19), the controller 50 repeats the determination in step S19 at a predetermined cycle, for example.

When the user operation inputting the lower limit of the overlapping time is performed (YES in S19), the controller 50 extends the current and the previous partial trajectories so as to have an overlapping portion with an overlapping time equal to or more than the lower limit thus input (S20). In the processing in the flowchart of Fig. 6 described above, the controller 50 sets partial trajectories that overlap with each other, on the basis of two partial trajectories input by the selecting operations by the user.

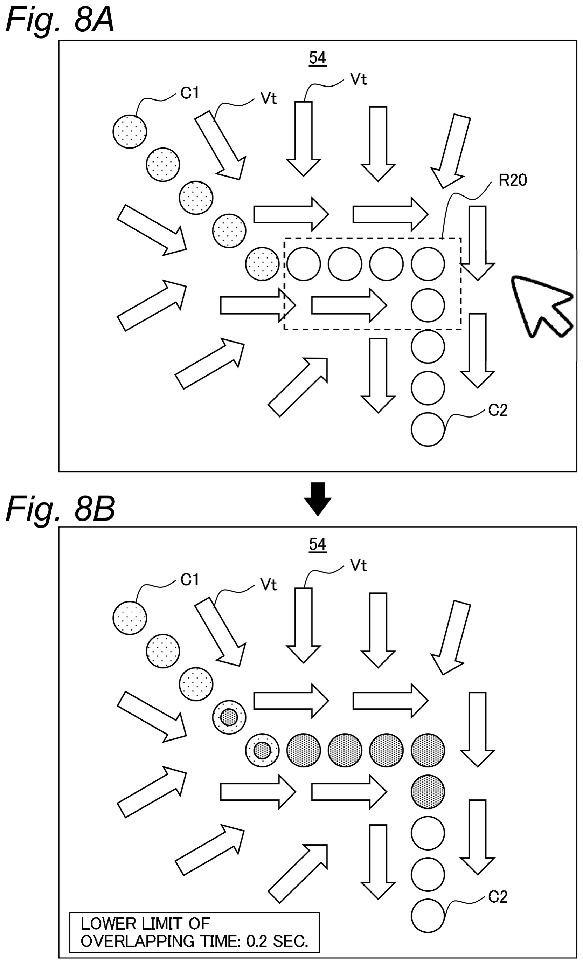

Figs. 8A and 8B are diagrams illustrating an example of extending the overlapping portion of the partial trajectories in the trajectory segmentation processing (S2). Fig. 8A illustrates an example in which the second partial trajectory is selected by a region R20 in the example in Fig. 7A, without any overlapping portion between the selected partial trajectory and the first partial trajectory. Fig. 8B illustrates an example in which a value "0.2 seconds" as the lower limit of the overlapping time has been entered by the user operation, in the example in Fig. 8A, and the two partial trajectories are extended on the basis of the lower limit.

After extending each of the partial trajectories (S20), the controller 50 performs the processing of step S17, in the same manner as when there is the overlapping portion between the partial trajectories selected by the user operation (YES in S16).

When partial trajectories of the predetermined number of segments have not been selected yet (NO in S18), the controller 50 repeats the processing in step S14 and thereafter.

When partial trajectories of the predetermined number of segments have been selected (YES in S18), the controller 50 updates the control model 30 using the machine learning in accordance with the trajectory data D1 segmented correspondingly to the attribute information D2, for example (S21). In the present embodiment, the control model 30 includes a plurality of control models each corresponding to one partial trajectory. For example, the controller 50 trains the control model corresponding to each of the partial trajectories in the trajectory data D1, using the data of the period corresponding to the partial trajectory, on the basis of the attribute information D2. The control model 30 will be described later in detail.

The controller 50 controls the updated control model 30 to display the trajectory of the robot 2 and the arrows Vt representing the directions of the motion on the display 54, similarly to step S13, for example (S22). In this processing, for example, as illustrated in Fig. 4, the controller 50 displays each of the segmented partial trajectories in a different manner from one another, such as a different color, according to the attribute information D2 assigned to each partial trajectory. The controller 50 also displays the overlapping portion of the partial trajectories in a manner according to the respective pieces of attribute information D2 assigned to the respective partial trajectories having the overlapping portion, in such a way that respective corresponding colors are superimposed on one another in the overlapping portion. The arrows Vt representing the directions of the motion obtained by the updated control model 30 are rendered on the basis of an output resultant of integrating inference results output from control models that correspond to the respective partial trajectories, using the parameters obtained as a result of the training of such control models.

After displaying the trajectory of the robot 2 and the arrows Vt of the directions of the motion obtained by the updated control model 30 (S22), the controller 50 ends the processing of this flowchart.

With the processing described above, displaying the trajectory or the like on the basis of the trajectory data D1 of the robot 2 (S13), the user operations for selecting partial trajectories are received until the number of the partial trajectories reaches the predetermined number of segments (S14, S18), and pieces of attribute information D2 corresponding to the number of partial trajectories are added to the selected partial trajectories (S17). In this processing, depending on whether there is the overlapping portion between the selected partial trajectory and the adjacent partial trajectory (S16), the pieces of attribute information D2 are assigned to the respective partial trajectories that partially overlap with each other (S17, S19, S20). Therefore, it is possible to set a plurality of partial trajectories, which segment the trajectory, so that the segmented partial trajectories overlap with each other, on the basis of the selecting operations by the user. Furthermore, each of the segmented partial trajectories can be managed by the attribute information D2.

By using the trajectory data D1 segmented on the basis of the attribute information D2 as described above, for example, the control model 30 can be updated using the machine learning in such a manner that the robot 2 is controlled accurately in accordance with the transition in the operation (S21). As described above, the terminal device 5 according to the present embodiment can control the machine learning of the control model 30 in such a manner that the robot 2 is caused to perform the operation at each stage of the operation, as illustrated in Fig. 4, in accordance with the pieces of attribute information D2 assigned to the respective partial trajectories. For example, the robot can be trained to operate differently in accordance with each of such partial trajectories.

Furthermore, when there is no overlapping portion between the two continuous partial trajectories (NO in S16), each of such partial trajectories is extended (S29) on the basis of the lower limit of the overlapping time, the lower limit being entered by the user (S19). Therefore, the trajectory can be segmented such that the segmented partial trajectories are ensured to have the overlapping portion.

Furthermore, before and after the control model 30 is updated, the directions of the motion of the robot 2 obtained by the control model 30 are displayed by the arrows Vt, as well as the trajectory (S13, S22). Therefore, it is possible to visualize how the operation of the robot 2 changes depending on how the trajectory is segmented, and this facilitates segmentation of the trajectory such that the robot 2 operates as intended by the user, for example. As the control model 30 prior to the trajectory segmentation, that is, prior to the update, one control model is trained using the trajectory data D1 of the entire trajectory (S12), and the directions of the motion obtained by the one control model are displayed as the arrows Vt.

In the example described above, partial trajectories are selected until the predetermined number of segments is reached (YES in S18), and then the control model 30 is updated using the machine learning (S21). The control model 30 may also be updated before the selected partial trajectories reach the predetermined number of segments. For example, the machine learning of a corresponding control model may be performed every time the attribute information D2 is assigned to the selected partial trajectory (S17). Furthermore, the display of the arrows Vt representing the directions of the motion may be updated after the control model corresponding to each of the partial trajectories is updated.

Furthermore, in the example described above, the terminal device 5 receives the user operation for entering the lower limit for the overlapping time (S19). Without limitation to the overlapping time, the lower limit may be entered as a minimum value in the amount of overlap, or as the number of data points in the coordinate data of the overlapping portion. Furthermore, in step S20, one of the current and previous selected partial trajectories, instead of both, may be extended so that these partial trajectories partially overlap with each other.

2-5. Details of Control Model

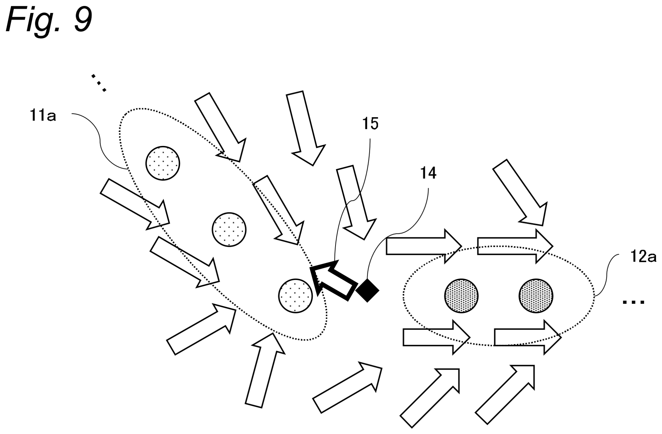

The control model 30, to be trained with the trajectory data D1 segmented in the trajectory segmentation processing (S2) described above, will now be explained in detail with reference to Fig. 9.

The control model 30 according to the present embodiment is implemented as a regression model, using Gaussian process regression such as that used in the non-patent document 1; G. Franzese, A. Meszaros, L. Peternel and J. Kober, "ILoSA: Interactive learning of stiffness and attractors," in IROS, 2021, for example. When the coordinate data $x(t) = (Xt, Yt)$ is input as the arm-tip coordinates of the robot 2, the control model 30 outputs the action data $y(t) = (VXt, VYt)$

representing a relative displacement of the arm-tip coordinates with respect the input coordinates, between the time t to the time t + 1.

Following Expression (1) represents a kernel matrix K of the Gaussian process regression. This kernel matrix is calculated from the coordinate data x(t) of the arm-tip coordinates at each point in time. With Expression (1), the kernel matrix K using the arm-tip coordinates along the trajectory at time t = 1, 2, ..., N (N is a positive number) is calculated, for example. $k(x^{(i)}, x^{(j)})(i, j \in \{1, 2, ..., N\})$ in Expression (1) represents a kernel function. As the kernel function, the Gaussian kernel indicated in Expression (2) is used, for example. The kernel function is not limited to the Gaussian kernel, and may be, for example, an exponential kernel or a periodic kernel.

[Math. 1]

$$K = \begin{bmatrix} k\left(x^{(1)},x^{(1)}\right) & k\left(x^{(1)},x^{(2)}\right) & \dots & k\left(x^{(1)},x^{(N)}\right) \\ k\left(x^{(2)},x^{(1)}\right) & k\left(x^{(2)},x^{(2)}\right) & \dots & k\left(x^{(2)},x^{(N)}\right) \\ \vdots & \vdots & \ddots & \vdots \\ k\left(x^{(N)},x^{(1)}\right) & k\left(x^{(N)},x^{(2)}\right) & \dots & k\left(x^{(N)},x^{(N)}\right) \end{bmatrix} \cdots (1)$$

[Math. 2]

$$k\left(x^{(i)},x^{(j)}\right) = \exp\left(-\frac{\left\|x^{(i)} - x^{(j)}\right\|^2}{\theta}\right) \cdots (2)$$

Explained below is an example in which the control model corresponding to the first partial trajectory is trained with the trajectory data D1 in times t = 1, 2, ..., and N, the first partial trajectory being obtained in the trajectory segmentation processing (S2). The trained control model infers the action data y* that is an unseen output, using the Gaussian process regression, for the coordinate data x* that is an unseen input arm-tip coordinates (i.e., coordinates not used for the training).

To begin with, the control model calculates the kernel function for the unseen coordinate data x* and the seen coordinate data $x^{(1)}, x^{(2)}, ..., x^{(N)}$ included in the trajectory data D1 as training data. By this calculation, a vertical vector $k_* = (k(x^{(1)}, x^*), k(x^{(2)}, x^*), ..., k(x^{(N)}, x^*))$ as shown in following Expression (3) is obtained. The kernel matrix K in Expression (3) is calculated using Expression (1) on the training data.

[Math. 3]

$$y' = \begin{bmatrix} y^{(1)} \\ \vdots \\ y^N \\ y^* \end{bmatrix} \sim \mathcal{N}\left(\begin{bmatrix} 0 \\ \vdots \\ 0 \\ 0 \end{bmatrix}, \begin{bmatrix} \overbrace{\begin{matrix} k\left(x^{(1)},x^{(1)}\right) & \cdots & k\left(x^{(1)},x^{(N)}\right) \\ \vdots & \ddots & \vdots \\ k\left(x^{(N)},x^{(1)}\right) & \cdots & k\left(x^{(N)},x^{(N)}\right) \end{matrix}}^{K} & \overbrace{\begin{matrix} k\left(x^{(1)},x^*\right) \\ \vdots \\ k\left(x^{(N)},x^*\right) \end{matrix}}^{k_*} \\ \underbrace{\begin{matrix} k\left(x^*,x^{(1)}\right) & \cdots & k\left(x^*,x^{(N)}\right) \end{matrix}}_{k_*^T} & k\left(x^*,x^*\right) \end{bmatrix}\right) \cdots (3)$$

Furthermore, the relationship in Expression (3) is established between the output vector $y = (y^{(1)}, y^{(2)},..., y^{(N)})$ that is a vertical vector resultant of converting the seen action data in the training data and the output vector $y' = (y^{(1)}, y^{(2)},..., y^{(N)}, y^*)$ including the unseen output y*. The training data herein can be expressed as follows.

[Math. 4]

$$x = \begin{bmatrix} x^{(1)} \\ \vdots \\ x^{(N)} \end{bmatrix} \qquad y = \begin{bmatrix} y^{(1)} \\ \vdots \\ y^{(N)} \end{bmatrix}$$

In the relationship of Expression (3), the probability distribution of the unseen output y* follows the Gaussian distribution of following Expression (4). $K^{-1}$ in Expression (4) is an inverse matrix of the kernel matrix K, and $k_*^T$ is a horizontal vector obtained by transposing $k_*$. In the probability distribution of the unseen output y* indicated in Expression (4), $k_*^T K^{-1} y$ is an expectation value (also referred to as "average"), and $k(x^*, x^*)-k_*^T K^{-1} k_*$ is a variance.
[Math. 5]

$$p(y^*|x^*, x, y) = \mathcal{N}(k_*^T \mathbf{K}^{-1} y, k(x^*, x^*) - k_*^T \mathbf{K}^{-1} k_*) \quad \cdots (4)$$

2-5-1. Integration of Inference Results from Control Models corresponding to Respective Partial Trajectories

In the present embodiment, for example, when the trajectory represented by the trajectory data D1 is divided into three segments as a result of the trajectory segmentation processing (S2), corresponding control models are trained for the respective segmented partial trajectories. For example, similarly to the control model corresponding to the first partial trajectory described above, each of the control models is trained using the partial trajectory corresponding thereto, and each control model performs an inference on the unseen output y* with respect to the unseen coordinate data x*. An operation for obtaining the final output from the control model 30, on the basis of such inference results of the respective control models, will be described below.

In the description hereunder, the averages of unseen outputs y* inferred by the three control models, respectively, are denoted as ml to m3, respectively, and the variances are denoted as $\Sigma1$ to $\Sigma3$, respectively. The variances $\Sigma1$ to $\Sigma3$ represent the uncertainty of the unseen outputs y* inferred by the respective control models, and take smaller values when the unseen coordinate data x* is closer to the coordinate data in the training data. The control model 30 according to the present embodiment calculates the final output for the unseen data x* as a weighted average m of the averages m1 to m3, using $1/\Sigma1$, $1/\Sigma2$, and $1/\Sigma3$, each being an inverse of corresponding one of the variances $\Sigma1$ to $\Sigma3$. Reflecting that the inverses generally do not sum up to "1", the control model 30 according to the present embodiment uses a weight obtained by normalizing these inverses with a softmax function, for example.

With such a calculation, the final output from the control model 30 can be obtained by giving a higher weight to the output of the control model with relatively low uncertainty (that is, more reliable), among the three control models. In addition, for example, in a case where the unseen coordinate data x* is in the vicinity of the overlapping portion of two partial trajectories, the variances $\Sigma1$ and $\Sigma2$ of the outputs of the control models corresponding to the respective partial trajectories take relatively close values, while the variance $\Sigma3$ of the outputs of the other control model takes a larger value than those of $\Sigma1$ and $\Sigma2$. In such a case, it is possible for the final output to take a value close to the center between the averages m1 and m2 of the outputs of the control models corresponding to the above two partial trajectories. In this way, it is possible to cause the robot 2 to transition between partial operations corresponding to the respective partial trajectories continuously and smoothly.

For example, in step S22 of the trajectory segmentation processing (S2), after the trajectory is segmented, each of the arrows Vt displayed as the direction of the motion of the robot 2 obtained by the updated control model 30 follows the weighted average of outputs from the control models corresponding to the respective segmented partial trajectories, as described above. An arrow Vt indicates the output y* = (VX*, VY*) of the control model 30 with respect to coordinate data x* = (X*, Y*), and is plotted in such a manner that the arrow Vt has the origin at x*, and a direction and length corresponding to y*.

Having been explained above is an example in which the weighted average of the outputs of the respective control models is used as the calculation for obtaining the final output of the control model 30. The output of the control model 30 is not limited thereto, and a control model having the smallest variance of the outputs may be selected from the three control models, and an average value of the outputs of the selected control model may be used, for example. In addition, for example, a filter or the like that excludes outliers may be applied to the averages m1 to m3 of the outputs of the respective control models.

2-5-2. Correction Term of Control Model

In general, with a control model trained with machine learning, when an unseen input x* is relatively far from the seen data in the training data, the output y* may become undetermined. Particularly in the robot control, because it is dangerous for a control command to be undetermined, it is desirable to calculate the control command using an additional correction term for bringing the arm-tip coordinates of the robot closer to the seen data. Such a correction term will now be explained with reference to Fig. 9.

Fig. 9 is a diagram for explaining a relationship between the correction term of the control model 30 and the trajectory segmentation. In the control model 30, for example, the control model corresponding to each partial trajectory outputs the control command to which the correction term $f_{stable}$ calculated by Expression (5) is added. As indicated in Expression (5), the correction term $f_{stable}$ can be calculated by, for example, differentiating the variance $\Sigma$ of the outputs of the respective control models, and multiplying a coefficient $-\alpha$ thereto. With such a correction term $f_{stable}$, the output of each control model is corrected in such a manner that the robot 2 always moves in a direction where the variance is relatively small (i.e., in a direction with a relatively larger number of training data points).
[Math. 6]

$$f_{\text{stable}}(x) = -\alpha\nabla\Sigma = \alpha\left(2k_*^{\top}(K)^{-1}\frac{\partial k_*}{\partial x}\right) \quad \cdots(5)$$

By correcting the output of the respective control models using the correction term $f_{\text{stable}}$ described above, the robot 2 can operate stably at the stages of the operation corresponding to the respective partial trajectory, for example.

The control command with the correction term $f_{\text{stable}}$ added thereto may generate a force drawing the arm-tip coordinates of the robot 2 into the space where there is dense coordinate data input to the control model, e.g., as indicated by the arrow 15 in Fig. 9. With a control model trained correspondingly to each of the segmented partial trajectories, a problem as described below may arise when there is no overlapping portion between two adjacent partial trajectories. That is, behavior of such a control model may become unstable in a space near the center between two partial trajectories.

For example, when two partial trajectories 11a, 12a do not have any overlapping portion as illustrated in Fig. 9, the middle point 14 between the partial trajectories 11a and 12a is located in a space where input data is sparse, for both of the two control models corresponding to the respective two partial trajectories. In such a case, the output from each of the control models trained using the partial trajectories 11a, 12a, respectively, may end up being undetermined, and cause instability in the behavior of the control model. Moreover, in such a case, the robot 2 may be subjected to a force in a direction drawing the arm-tip coordinates into the space where input data for the partial trajectory 11a is dense, as indicated by the arrow 15, for example, and such a force may prohibit the arm-tip coordinates of the robot 2 from transitioning from the partial trajectory 11a to the partial trajectory 12a.

In the trajectory segmentation processing (S2) according to the present embodiment, when there is no overlapping portion in the adjacent partial trajectories (NO in S16) selected by the selecting operations of a partial trajectory by the user (S14), the partial trajectories are automatically extended so that the adjacent partial trajectories overlap with each other (S20). Therefore, it is possible to alleviate the above-described problem that may arise when there is no overlapping portion in the partial trajectories.

2-6. Operation Under Trained Control Model

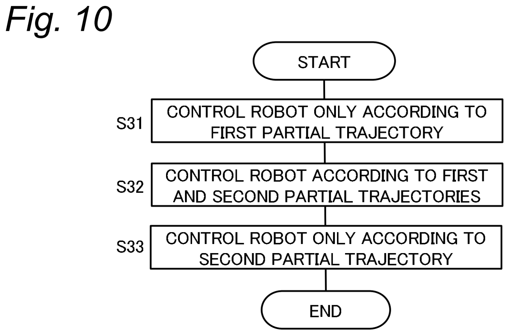

Explained now with reference to Fig. 10 is processing for causing the robot 2 to perform the operation which is learned by the training of the control model 30 as described above (S3 in Fig. 5), in the control system 1 according to the present embodiment. Fig. 10 is a flowchart illustrating such a processing performed under the control of the trained control model 30.

The processing illustrated in Fig. 10 is started when a user operation for instructing the robot 2 to operate is received from the user I/F 53 of the terminal device 5, for example, after the control model 30 is updated using the machine learning (S2) that is based on the plurality of partial trajectories obtained in the trajectory segmentation processing. Each of the steps illustrated in Fig. 10 is executed by the controller 50 of the terminal device 5, for example.

To begin with, for example, to start the robot 2 to operate, the controller 50 causes the trained control model 30 to calculate the control command for the robot 2 only in accordance with the first partial trajectory obtained in the trajectory segmentation processing (S2) (S31). For example, for such a period in which the robot 2 has just started to operate, only the coordinate data corresponding to the first partial trajectory is input to the control model 30, among the pieces of coordinate data of the segmented partial trajectories. At this step, when the control model 30 obtains a final output by integrating inference results from the respective control models corresponding to the respective partial trajectories, weights close to "0" are given to the inference results from the control models corresponding to the partial trajectories other than the first one, so that it is possible to control the robot 2 only in accordance with the first partial trajectory.

Next, when the operation of the robot 2 proceeds from step S1, the controller 50 calculates the control command for the robot 2 in accordance with both of the first partial trajectory and the second partial trajectory, which is a segment divided following the first partial trajectory (S32). When the coordinate data of the robot 2 input to the control model 30 indicates coordinates near the center between the first partial trajectory and the second partial trajectory, the outputs of two control models corresponding to the respective two partial trajectories in the control model 30 are weighted in such a manner that both of the outputs are reflected to the final output, for example. In this way, the system 1 can reflect the result of the training of the control model 30 to the operation of the robot 2, the training using the trajectories segmented so as to have the overlapping portion between two adjacent partial trajectories.

When the robot 2 further operates from step S2, the controller 50 calculates the control command for the robot 2 only in accordance with the second partial trajectory, similarly to the control in accordance with the first partial trajectory in step S31, for example (S33). When the control model 30 is trained with three or more partial trajectories to cause the robot 2 to operate, the controller 50 may repeat the similar processing to step S32 and thereafter, on the basis of the coordinate data resultant of the operation of the robot 2. The controller 50 ends the processing in this flowchart, subsequently.

In the processing described above, with the control model 30 having been trained with trajectories segmented to have the overlapping portion, it is possible to control the robot 2 so as to gradually transition between the stages of the operation, the stages corresponding to the respective segmented partial trajectories (S31 to S33). The processing described above may be performed by a control model trained using a method other than machine learning, using a plurality of partial trajectories having the overlapping portion, for example.

3. SUMMARY

As described above, the terminal device 5 according to the present embodiment is an example of an information processing device for controlling machine learning to cause the robot 2 to perform a predetermined operation. The terminal device 5 includes a display 54 that displays information, a user I/F 53 (an example of an input interface) that receives a user operation, and a controller 50 that controls the display 54 and the user I/F 53. The controller 50 causes the display 54 to display a trajectory representing the motion of the robot 2 in the predetermined operation (S13). The controller 50 causes the user I/F 53 to receive the user operation on the trajectory being displayed on the display 54 (S14, S19) to set a plurality of partial trajectories, which segment the trajectory (S17, S18, S20). The controller 50 updates the control model 30 using machine learning, as an example of controlling machine learning to cause the robot 2 to perform the predetermined operation for each of the plurality of partial trajectory, in accordance with the set partial trajectories based on the user operation (S21). The set partial trajectories, as the plurality of partial trajectories that segment the trajectory, have an overlapping portion between partial trajectories that are adjacent to each other in the trajectory (see Fig. 4).

With the terminal device 5 described above, for example, by receiving the user operation selecting a partial trajectory (S14, S19) with the trajectory of the robot 2 being displayed (S13), the plurality of partial trajectories segmenting the trajectory are set to overlap with each other (S17, S18, S20). The terminal device 5 updates the control model 30 through machine learning to cause the robot 2 to perform the predetermined operation, in accordance with the set partial trajectories (S21). Therefore, it is possible to facilitate training of the control model 30 allowing the robot 2 to operate accurately, e.g., by enabling smooth transition from a partial trajectory to the next partial trajectory, in the predetermined operation of the robot 2 under the control of the control model 30.

In the present embodiment, the controller 50 controls the machine learning in accordance with the set partial trajectories to cause the robot 2 to perform a plurality of partial operations respectively corresponding to the set partial trajectories in the predetermined operation (S21). Therefore, it is possible to train the control model 30 for the robot 2 in accordance with different operations correspondingly to the respective partial trajectories, using the machine learning, for example.

In the present embodiment, the controller 50 detects whether the plurality of partial trajectories partially overlap with each other, on the basis of input partial trajectories by the selecting operation of a partial trajectory (an example of the user operation) (S16). Therefore, when two of the input partial trajectories do not overlap with each other, it is possible to facilitate setting the partial trajectories so as to divide the trajectory into segments overlapping with each other, e.g., by executing a predetermined processing to adjust the partial trajectories so as to overlap with each other, for example (S19, S20).

In the present embodiment, when detecting that the plurality of partial trajectories do not partially overlap with each other (NO in S16), the controller 50 sets the plurality of partial trajectories such that each partial trajectory partially overlaps with another partial trajectory that is adjacent thereto (S20). Therefore, for example, even when there is no overlapping portion between the adjacent partial trajectories entered by the user operation, it is possible to generate such an overlapping portion automatically.

In the present embodiment, the controller 50 receives a user operation for entering the lower limit of the overlapping time, via the user I/F 53 (S19), as an example of an additional user operation to set the lower limit to an overlap amount indicating a degree by which the plurality of partial trajectories overlap with each other. When the overlapping time in the plurality of partial trajectories is shorter than the lower limit, the controller 50 extends each of such partial trajectories, as an example of setting the plurality of partial trajectories to increase the overlapping time to the lower limit or more (S20). Therefore, the user can enter the lower limit such as the overlapping time, depending on a task of the operation for which the robot 2 is trained, and adjust the length of the overlapping portion, for example.

In the present embodiment, the controller 50 assigns attribute information D2 identifying the plurality of partial trajectories from one another, to each of the set partial trajectories based on the selecting operation of a partial trajectory (an example of the user operation) (S17). The controller 50 causes the display 54 to display the attribute information D2 assigned to each of the plurality of partial trajectories to indicate that a plurality of pieces of the attribute information D2 are assigned to the overlapping portion where the plurality of partial trajectories overlap with each other in the trajectory (S17, see Fig. 4). In the manner described above, the terminal device 5 can manage the set partial trajectories using the attribute information D2. In addition, for example, by displaying the attribute information D2 as described above, overlapping portions of the plurality of partial trajectories can be visualized, so that it is possible to facilitate the user operation for selecting the partial trajectories that divides the trajectories into segments overlapping with each other, for example.

In the present embodiment, the controller 50 controls the machine learning to cause the robot 2 to perform the predetermined operation, in accordance with the attribute information D2 assigned to the plurality of partial trajectories (S21). With the result of such machine learning, for example, it is possible to control the robot 2 to operate accurately on the basis of the attribute information D2 assigned to the partial trajectories dividing the trajectory into segments overlapping with each other.

In the present embodiment, the display 54 displays a direction of motion of the robot 2 in the predetermined operation after the machine learning (S13, S22). The controller 50 updates display of the direction of the motion on the display 54, as a result of controlling the machine learning in accordance with the set partial trajectories based on the user operation (S22). With such processing, it is possible to give a user feedback on how the directions of the motion of the robot 2 in the predetermined operation change after the machine learning, as a result of updating the control model 30 using the machine learning in accordance with the partial trajectories set via the user operation (S21).

In the present embodiment, the controller 50 acquires, as the trajectory, the coordinate data x(t) representing the motion of the robot 2 under direct teaching in increments of time, that is, the motion being resultant of direct teaching (S11). Thereby, for example, the user can teach rough operations of the robot 2, intuitively. In the present embodiment, the controller 50 may acquire, as the trajectory, the coordinate data representing the motion of the robot 2 under remote control, that is, the motion being resultant of remote control. Thereby, for example, it is possible to avoid contact between the robot 2 and the user, and facilitate safe teaching of an operation of the robot 2.

In the present embodiment, the controller 50 trains, in the machine learning, the control model 30 that controls an operation of the robot 2, in accordance with the plurality of partial trajectories set based on the user operation (S21). The controller 50 causes the robot 2 to perform the predetermined operation, by sequentially inputting pieces of the coordinate data x(t), as an example of positions or postures at which the robot 2 operates, to the control model 30, to cause the control model 30 to output the action data y(t), as an example of a control command for causing the robot 2 to operate. Therefore, the control model 30 can be trained in accordance with the partial trajectories that overlap with each other as segments from the trajectory of the operation of the robot 2, and cause the control model 30 to control the robot 2 so as to perform the predetermined operation, for example.

In the present embodiment, the action data y(t), as the control command output from the control model 30 in response to the coordinate data x(t) that is an example of an input position or posture, includes an average value and a variance value that define a probability distribution of a relative displacement to a target coordinate at which the robot 2 is caused to operate at the input coordinate data x(t) (see Expression (4)). The control command from the control model 30 may be determined as one value from the average value in accordance with the variance value, for example.

The trajectory segmentation processing (S2) according to the present embodiment provides an information processing method for controlling machine learning to cause the robot 2 to perform a predetermined operation. The present method is executed by the controller 50 of the terminal device 5 (an example of a computer) controlling the display 54 that displays information and the user I/F 53 (an example of an input interface) that receives a user operation. In this method, the controller 50 causes the display 54 to display a trajectory representing motion of the robot 2 during the predetermined operation (S13, S21). The controller 50 causes the user I/F 53 to receive the user operation on the trajectory being displayed on the display 54 (S14, S19), to set a plurality of partial trajectories that segment the trajectory (S17, S18, S20). The controller 50 updates the control model 30 using the machine learning, as an example of controlling the machine learning to causing the robot 2 to perform the predetermined operation for each of the plurality of partial trajectory, in association with set partial trajectories based on the user operation (S21). The set partial trajectories, as the plurality of partial trajectories that segment the trajectory, have an overlapping portion between partial trajectories that are adjacent to each other in the trajectory (see Fig. 4).

In the present embodiment, a program for causing the controller 50 of the terminal device 5, which is an example of a computer, to execute the information processing method as described above is provided. With the information processing method and the program as described above, it is possible to facilitate the training to enable the robot 2 to operate accurately.

Furthermore, the terminal device 5 according to the present embodiment is an example of a control device that causes the robot 2 to perform a predetermined operation. The terminal device 5 includes a communication I/F 52 (an example of a communication interface) that performs data communication with an external device such as the robot control device 4, and a controller 50 that controls the robot 2 by data communication via the communication I/F 52 (see S3 in Fig. 5). In the terminal device 5, a plurality of partial trajectories segmenting a trajectory are set, the trajectory representing motion of the robot 2 during the predetermined operation, as represented by the trajectory data D1 segmented in accordance with the attribute information D2, for example. The plurality of partial trajectories include a first partial trajectory and a second partial trajectory adjacent to each other in the trajectory of the robot 2. The first partial trajectory and the second partial trajectory include an overlapping portion where the first partial trajectory and the second partial trajectory overlap with each other, a first individual portion only belonging to the first partial trajectory, and a second individual portion only belonging to the second partial trajectory (see Fig. 4). The controller 50 causes the robot 2 to perform the predetermined operation in the overlapping portion in accordance with both of the first partial trajectory and the second partial trajectory (S32).

With the terminal device 5 as described above, for example, in the overlapping portion of two partial trajectories where operational stages change among the respective stages of the predetermined operation performed by the robot 2, among the plurality of partial trajectories set correspondingly to the respective stages, the robot 2 is controlled in accordance with both of such two partial trajectories (S32). For example, this enables the robot 2 to transition between the stages of the operation continuously and smoothly, the stages corresponding to the respective partial trajectories, and therefore the robot 2 can operate accurately. The control device according to the present disclosure is not limited to the example described above, and may be implemented by the robot control device 4, or both of the robot control device 4 and the terminal device 5, for example.

In the present embodiment, the controller 50 causes the robot 2 to perform the predetermined operation in the first individual portion in accordance with the first partial trajectory (S31), and causes the robot 2 to perform the predetermined operation in the second individual portion in accordance with the second partial trajectory (S33). Therefore, for example, also in such individual portions other than the overlapping portion between the plurality of partial trajectories, the robot 2 can operate accurately only in accordance with the partial trajectory corresponding to each stage for the respective stages of the operation corresponding to the respective partial trajectories.

In the present embodiment, the terminal device 5 further includes the user I/F 53 (an example of an information input interface; see, e.g., S14 and S19 in Fig. 6) via which information on the plurality of partial trajectories is input, and the controller 50 (an example of a trainer; see S2 in Fig. 5) that performs training in machine learning for causing the robot 2 to perform a predetermined operation, in accordance with the plurality of partial trajectories set based on the information input via the user I/F 53 (see S17). The controller 50 performs the training in the machine learning in accordance with the first individual portion, the overlapping portion, and the second individual portion, in the first partial trajectory and the second partial trajectory (S21). For example, with the control model 30 trained using such machine learning, it is possible to cause the robot 2 to perform the predetermined operation in accordance with respective portions of the first partial trajectory and the second partial trajectory (S31 to S33), and therefore to facilitate operating the robot 2 accurately.

In the present embodiment, the terminal device 5 further includes an information processor that controls machine learning for causing the robot 2 to perform a predetermined operation. The controller 50 is an example of the information processor in the present embodiment. The controller 50 causes the display 54 that displays information to display the trajectory representing the motion of the robot 2 in the predetermined operation (S13, S21). The controller 50 causes the user I/F 53, as an example of an input interface that receives a user operation, to receive the user operation on the trajectory being displayed on the display 54 (S14, S19) to set the plurality of partial trajectories that segment the trajectory (S17, S18, S20). The controller 50 updates the control model 30 using the machine learning, as an example of controlling the machine learning for causing the robot 2 to perform the predetermined operation for each of the plurality of partial trajectories, in accordance with set partial trajectories based on the user operation (S21). The set partial trajectories, as the plurality of partial trajectories that segment the trajectory, have overlapping portions between partial trajectories that are adjacent to each other in the trajectory (see Fig. 4). The controller 50 controls the robot 2 in accordance with the result of the machine learning controlled by the controller 50 (S31 to S33). Therefore, the robot 2 can operate accurately by setting the plurality of partial trajectories in such a manner that adjacent partial trajectories overlap with each other, along the trajectory in which the robot 2 moves during the predetermined operation.

Furthermore, in the present embodiment, for example, a control method for causing the robot 2 to perform the predetermined operation, by the control system 1 including the terminal device 5 as described above, is provided.

(Second Embodiment)

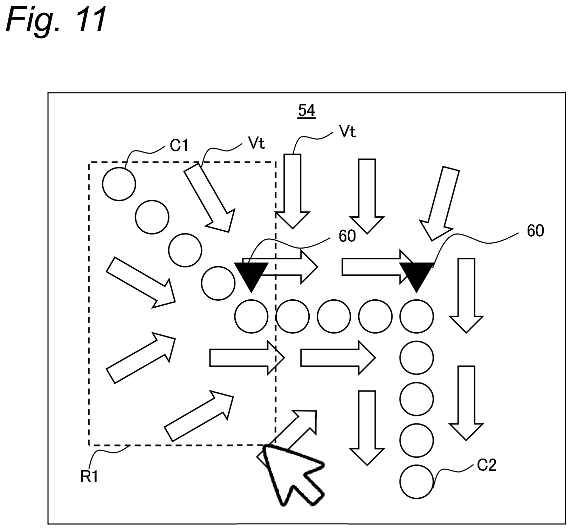

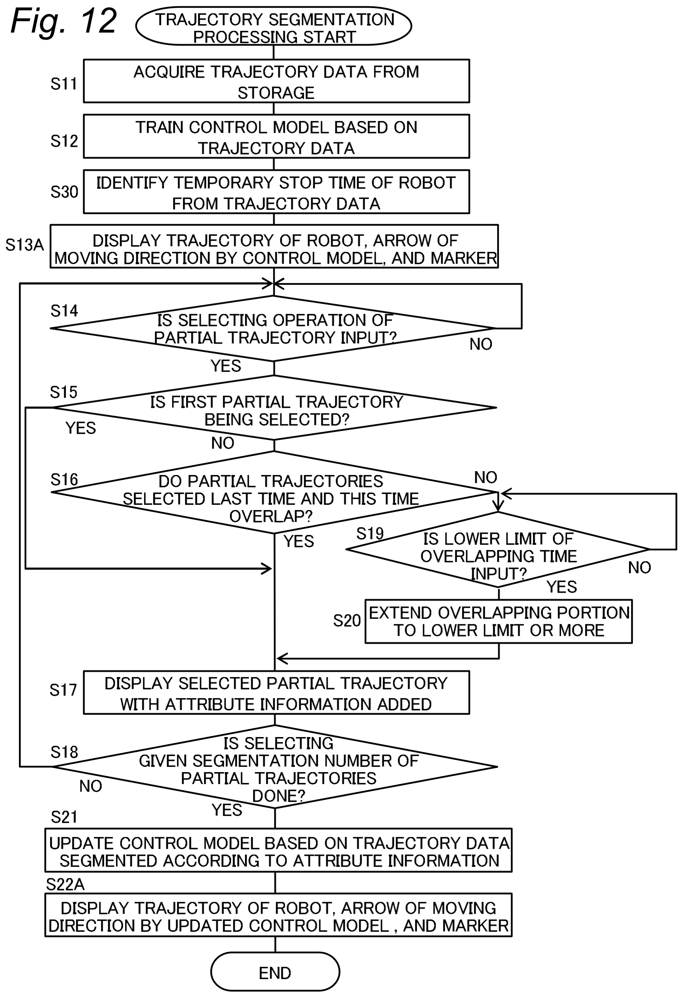

A second embodiment of the present disclosure will now be explained with reference to Figs. 11 and 12. Having been explained in the first embodiment is an example in which the terminal device 5 receives the user operation for selecting a partial trajectory displaying the trajectory of the robot 2 and the arrows Vt representing the directions of motion, in the trajectory segmentation processing (S2). In the second embodiment, the terminal device 5 configured to display markers in accordance with the changes in the operation of the robot 2, in the trajectory segmentation processing, will be further explained.

The terminal device 5 according to the present embodiment will be described, omitting the description of the configurations and operations that are similar to those in the terminal device 5 according to the first embodiment, as appropriate.

Fig. 11 is a diagram illustrating an example of display for the trajectory segmentation processing in the terminal device 5 according to the second embodiment. Fig. 11 illustrates an example in which the first partial trajectory is selected by the user operation in the trajectory segmentation processing, similarly to that in the example in Fig. 7A. The terminal device 5 according to the present embodiment displays a marker 60 on the display 54, in addition to the trajectory and the arrows Vt representing the directions of motion of the robot 2, when receiving the user operation for selecting a partial trajectory. The marker 60 indicates a position where the robot 2 has stopped for a predetermined time length that is relatively long, in the direct teaching by the user, for example.

In the operation of the robot 2, for example, in a portion where the operation changes between the approaching stage, the sliding stage, the inserting stage, and the like described above, the robot 2 may temporarily stop for changing the direction. With the display of the marker 60, for example, it is possible to facilitate for the user recognizing the portion where the operation of the robot 2 changes in the trajectory. Therefore, for example, the user can input the user operation for selecting a partial trajectory by referring to the marker 60, and segment the trajectory in accordance with how the operation of the robot 2 changes.

Fig. 12 is a flowchart illustrating the trajectory segmentation processing performed on the terminal device 5 according to the second embodiment. In this embodiment, the controller 50 of the terminal device 5 executes processing for displaying the marker 60 (S30), in addition to the processing that are similar to those in steps S11 to S12 and S14 to S21 in the trajectory segmentation processing (Fig. 6) according to the first embodiment, for example. In the present embodiment, the controller 50 executes processing of further displaying the marker 60 (S13A, S22A), instead of steps S13 and S22 in Fig. 6.

After training the control model 30 on the basis of the acquired trajectory data D1 (S12), the controller 50 identifies a time at which the robot 2 has stopped for the predetermined time length (e.g., 3 seconds), on the basis of the coordinates for each time included in the trajectory data D1, for example (S30). The predetermined time length used in identifying the time of such a temporary stop is set to a length of time for which it can be presumed that the robot 2 has temporarily stopped for the changes in the operation, for example.

The controller 50 displays the marker 60 on the display 54 so that the marker 60 indicates the coordinates at the identified time of the temporary stop on the trajectory, on the basis of the identified time, in addition to the trajectory of the robot 2 represented by the trajectory data D1 and the arrows Vt representing the directions of the motion obtained by the control model 30, for example (S13). In the example in Fig. 12, the display 54 displays markers 60 at two points of the trajectory.

After the control model 30 is updated on the basis of the segmented trajectory data D1 (S21), the controller 50 also displays the marker 60 on the basis of the time of the temporary stop identified in step S30 (S22A), in addition to the display similar to that in step S22, for example.

With the processing described above, the marker 60 is displayed on the display 54 correspondingly to the time at which the robot 2 temporarily stops, in addition to the trajectory and the like of the robot 2 (S30, S13A, S22A). In this manner, for example, by displaying the marker 60 at a position where the robot 2 temporarily stops for the changes in the operation, it is possible to facilitate the user operation for selecting a partial trajectory segmenting the trajectory on the basis of the marker 60, for example.

Having been explained above is an example in which the time of the temporary stop is identified on the basis of the trajectory data D1 of the robot 2, and the marker 60 is displayed on the trajectory to point to the coordinates corresponding to the identified time. Without limitation to the time of the temporary stop, it is also possible to display the marker 60 on the basis of a time that is designated by the user, in the direct teaching or the like, by pressing a predetermined button of a controller, the designated time being retained in association with the trajectory data D1, for example.

As described above, in the terminal device 5 according to the present embodiment, the controller 50 displays a marker indicating a position where the trajectory satisfies a predetermined condition, on the trajectory displayed on the display 54, the predetermined condition being associated with a change in the operation of the robot 2 (S13A, S22A). Examples of the predetermined condition include the time of the temporary stop in accordance with the changes in the operation of the robot 2, and the time designated by the user in direct teaching or the like, for example.

With the terminal device 5 as described above, for example, by displaying the marker 60 on the GUI for segmenting the trajectory of the robot 2, it is possible to facilitate for the user checking phases in the transition or the like in accordance with the changes in the operation along the trajectory of the robot 2.

(Other Embodiments)

The first and the second embodiments are described above, as examples of the technology disclosed in the present application. However, the technology according to the present disclosure is not limited thereto, and may also be applied to embodiments including changes, replacements, additions, omissions, and the like made as appropriate. In addition, it is also possible to combine the elements described in the embodiments to form a new embodiment. Other embodiments will now be explained as some examples.

In the example described in each of the embodiments, the terminal device 5 detects the overlapping portion between two partial trajectories in the trajectory segmentation processing (Fig. 6, Fig. 12) and, when there is no overlapping portion (NO in S16), each of the partial trajectories is automatically extended (S20). In the present embodiment, upon detecting that there is no overlapping portion in the partial trajectories entered by the selecting operation by the user, the terminal device 5 may prompt the user to select partial trajectories that overlap each other, by not accepting the user operation for selecting the partial trajectories. Furthermore, the terminal device 5 according to the present embodiment does not need to detect the overlapping portion. For example, when the user operation for selecting a partial trajectory is received (S14), a display or the like prompting the user to select the partial trajectory overlapping with the previously selected partial trajectory may be displayed on the display 54.

Having been explained in each of the embodiments is an example in which the Gaussian process regression is used for the control model 30. The control model is, however, not limited to the Gaussian process regression. In the present embodiment, for example, the control model for each partial trajectory may be implemented by a neural network, or may be trained by supervised training that uses the action data along the trajectory data D1, as training data. The training of the control model is not limited to machine learning such as supervised training, and various methods for training the robot 2 to operate on the basis of the trajectory data D1 may be used. For example, the control model may be trained based on the trajectory data D1 using dynamic movement primitives (DMPs).

Having been explained in each of the embodiments is an example in which the control model is trained for each of the partial trajectories. In the present embodiment, for example, it is also possible to add the attribute information D2 to the input information input to one control model so that the behavior of the control model changes depending on the attribute information D2. When adding the attribute information D2 as a discrete value to the input information, it is possible to facilitate training allowing the robot 2 to operate accurately, by a control model implemented as a neural network or the like, for example.

Having been explained in each of the embodiments is an example in which the robot 2 performs the operation of inserting the connector 6 into the socket 7, as illustrated in Fig. 1, in the control system 1. The operation to be performed by the robot 2 in the control system 1 is not limited to the above example, and may be various operations by which the trajectory is caused by the robot 2. In addition, the control system 1 is not limited to the robot 2 illustrated in Fig. 1, and may be applied to control of various robots that perform various operations.

Having been explained in each of the embodiments is an example in which the terminal device 5 displays the trajectory of the robot 2 in the relationship between the X axis and the Y axis, for example, as illustrated in Fig. 4. The terminal device 5 according to the present embodiment may display the trajectory using a temporal axis, e.g., as a relationship between the X axis and the temporal axis.

Embodiments are described above, as examples of the technology according to the present disclosure. The accompanying drawings and the detailed description are provided for this purpose.

Accordingly, the components described in the accompanying drawings and the detailed description may include not only the components essential for solving the problems, but also components that are not essential for solving the problems, in order to explain examples of the above technology. Therefore, it should not be immediately recognized that these non-essential components are essential, based on the fact that these non-essential components are illustrated in the accompanying drawings and described in the detailed description.

In addition, the above-described embodiments are intended to illustrate the technology according to the present disclosure, and various changes, replacements, additions, omissions, and the like may be made within the scope of the claims or equivalents thereof.

(Summary of Aspects)

Various aspects according to the present disclosure are as listed below.

A first aspect according to the present disclosure is a control device for causing a robot to perform a predetermined operation. The control device includes a communication interface that performs data communication with an external device, and a controller that controls the robot by data communication via the communication interface. A plurality of partial trajectories segmenting a trajectory are set, the trajectory representing motion of the robot during the predetermined operation. The plurality of partial trajectories include a first partial trajectory and a second partial trajectory adjacent to each other in the trajectory. The first partial trajectory and the second partial trajectory include: an overlapping portion where the first partial trajectory and the second partial trajectory overlap with each other; a first individual portion only belonging to the first partial trajectory; and a second individual portion only belonging to the second partial trajectory. The controller causes the robot to perform the predetermined operation in the overlapping portion in accordance with both of the first partial trajectory and the second partial trajectory.

A second aspect is the control device according to the first aspect, wherein the controller is configured to cause the robot to perform the predetermined operation in the first individual portion in accordance with the first partial trajectory, and the robot to perform the predetermined operation in the second individual portion in accordance with the second partial trajectory.

A third aspect is the control device according to the first or second aspect, further includes: an information input interface via which information on the plurality of partial trajectories is input; and a trainer configured to perform training in machine learning for causing the robot to perform the predetermined operation, in accordance with the plurality of partial trajectories set based on the information input via the information input interface. The trainer is configured to perform the training in the machine learning in accordance with the first individual portion, the overlapping portion, and the second individual portion, in the first partial trajectory and the second partial trajectory.

A fourth aspect is the control device according to any of the first to third aspects, further includes an information processor configured to control machine learning for causing the robot to perform the predetermined operation. The information processor is configured to: cause a display that displays information, to display the trajectory representing the motion of the robot during the predetermined operation; cause an input interface that receives a user operation, to receive the user operation on the trajectory being displayed on the display to set the plurality of partial trajectories that segment the trajectory; and control the machine learning to cause the robot to perform the predetermined operation for each of the plurality of partial trajectories, in accordance with set partial trajectories based on the user operation. The set partial trajectories, as the plurality of partial trajectories that segment the trajectory, have an overlapping portion between partial trajectories that are adjacent to each other in the trajectory. The controller is configured to control the robot in accordance with a result of the machine learning controlled by the information processor.

A fifth aspect according to the present disclosure is an information processing device for controlling machine learning to cause a robot to perform a predetermined operation. The information processing device includes a display that displays information, an input interface that receives a user operation, a controller that controls the display and the input interface. The controller causes the display to display a trajectory representing motion of the robot during the predetermined operation. The controller causes the input interface to receive the user operation on the trajectory being displayed on the display to set a plurality of partial trajectories that segment the trajectory. The controller controls the machine learning to cause the robot to perform the predetermined operation for each of the plurality of partial trajectories, in accordance with set partial trajectories based on the user operation. The set partial trajectories, as the plurality of partial trajectories that segment the trajectory, have an overlapping portion between partial trajectories that are adjacent to each other in the trajectory.

A sixth aspect is the information processing device according to the fifth aspect, wherein the controller controls the machine learning in accordance with the set partial trajectories, to cause the robot to perform a plurality of partial operations respectively corresponding to the set partial trajectories in the predetermined operation.

A seventh aspect is the information processing device according to the fifth or sixth aspect, wherein the controller is configured to detect whether the plurality of partial trajectories partially overlap with each other, based on input partial trajectories by the user operation.

An eighth aspect is the information processing device according to the seventh aspect, wherein the controller is configured to set the plurality of partial trajectories such that each partial trajectory partially overlaps with an adjacent partial trajectory, when the controller detects that the plurality of partial trajectories do not partially overlap with each other.

A ninth aspect is the information processing device according to any of the fifth to eighth aspects, wherein the controller is configured to: cause the input interface to receive an additional user operation to set a lower limit of an overlap amount indicating a degree by which the plurality of partial trajectories overlap with each other; and when the overlap amount in the plurality of partial trajectories is less than the lower limit, set the plurality of partial trajectories to increase the overlap amount to the lower limit or more.

A tenth aspect is the information processing device according to any of the fifth to ninth aspects, wherein the controller is configured to: assign attribute information identifying the plurality of partial trajectories from one another, to each of the set partial trajectories based on the user operation; and cause the display to display the attribute information assigned to each of the partial trajectories to indicate that a plurality of pieces of the attribute information are assigned to the overlapping portion where the plurality of partial trajectories overlap with each other in the trajectory.

An eleventh aspect is the information processing device according to the tenth aspect, wherein the controller is configured to control the machine learning to cause the robot to perform the predetermined operation, in accordance with the attribute information assigned to the plurality of partial trajectories.

A twelfth aspect is the information processing device according to the tenth or eleventh aspect, cause the display to display each of the plurality of partial trajectories in a different manner according to the attribute information assigned to the partial trajectory; and display, in the overlapping portion where the plurality of partial trajectories overlap with each other, overlapping partial trajectories to be superimposed on one another in a manner according to the attribute information of the respective overlapping partial trajectories.

A thirteenth aspect is the information processing device according to any of the fifth to twelfth aspects, wherein the display is configured to display a direction of the motion of the robot in the predetermined operation after the machine learning, and the controller is configured to update display of the direction of the motion on the display as a result of controlling the machine learning in accordance with the set partial trajectories based on the user operation.

A fourteenth aspect is the information processing device according to any of the fifth to thirteenth aspects, wherein the controller is configured to acquire, as the trajectory, coordinate data representing the motion of the robot in increments of time, the motion being resultant of direct teaching.

A fifteenth aspect is the information processing device according to any of the fifth to fourteenth aspects, wherein the controller acquires, as the trajectory, coordinate data representing the motion of the robot in increments of time, the motion being resultant of remote control.

A sixteenth aspect is the information processing device according to any of the fifth to fifteenth aspects, wherein the controller is configured to display a marker indicating a position where the trajectory satisfies a predetermined condition, on the trajectory displayed on the display, the predetermined condition being associated with a change in an operation of the robot.

A seventieth aspect is the information processing device according to any of the fifth to sixteenth aspects, wherein the controller is configured to: train, in the machine learning, a control model that controls an operation of the robot, in accordance with the plurality of partial trajectories set based on the user operation; and cause the control model to output a control command to operate the robot, by sequentially inputting positions or postures at which the robot operates, to cause the robot to perform the predetermined operation. The control command output from the control model includes an average value and a variance value that define a probability distribution of a relative displacement to a target coordinate where the robot is caused to operate at an input position or posture, the control command being output in response to the input position or posture.

An eighteenth aspect is the information processing device according to the seventeenth aspect, wherein the control command output from the control model includes an average value and a variance value that define a probability distribution of a relative displacement to a target coordinate where the robot is caused to operate at an input position or posture, the control command being output in response to the input position or posture.

A nineteenth aspect according to the present disclosure is an information processing method for controlling machine learning to cause a robot to perform a predetermined operation. The information processing method including, by a controller of a computer controlling a display that displays information and an input interface that receives a user operation: causing the display to display a trajectory representing motion of the robot during the predetermined operation; causing the input interface to receive the user operation on the trajectory being displayed on the display to set a plurality of partial trajectories that segment the trajectory; and controlling the machine learning to cause the robot to perform the predetermined operation for each of the plurality of partial trajectories, in accordance with set partial trajectories based on the user operation. The set partial trajectories, as the plurality of partial trajectories that segment the trajectory, have an overlapping portion between partial trajectories that are adjacent to each other in the trajectory.

A twentieth aspect of the present disclosure is a program for causing a controller of a computer to execute the information processing method according to the nineteenth aspect.

A twenty-first aspect of the present disclosure is a control method for causing a robot to perform a predetermined operation. In the present method, a plurality of partial trajectories segmenting a trajectory are set, the trajectory representing motion of the robot during the predetermined operation. The plurality of partial trajectories include a first partial trajectory and a second partial trajectory adjacent to each other in the trajectory. The first partial trajectory and the second partial trajectory include: an overlapping portion where the first partial trajectory and the second partial trajectory overlap with each other; a first individual portion only belonging to the first partial trajectory; and a second individual portion only belonging to the second partial trajectory. The controller causes the robot to perform the predetermined operation in the overlapping portion in accordance with both of the first partial trajectory and the second partial trajectory.

In a twenty-second aspect, in the control method according to the twenty-first aspect, the controller causes the robot to perform a predetermined operation in the first individual portion in accordance with the first partial trajectory, and causes the robot to perform the predetermined operation in the second individual portion in accordance with the second partial trajectory.

In a twenty-third aspect, in the control method of the twenty-first or twenty-second aspect, a trainer of a computer performs training in machine learning for causing the robot to perform the predetermined operation, in accordance with a plurality of partial trajectories set based on information input from an input interface via which the information on the plurality of partial trajectories is input, and the trainer performs the training in the machine learning in accordance with the first individual portion, the overlapping portion, and the second individual portion, in the first partial trajectory and the second partial trajectory.

The present disclosure is applicable to various types of control systems that cause a robot to perform a predetermined operation.

## Claims

1. A control device for causing a robot to perform a predetermined operation, the control device comprising:

   a communication interface configured to perform data communication with an external device; and
   a controller configured to control the robot by data communication via the communication interface,
   wherein a plurality of partial trajectories segmenting a trajectory are set, the trajectory representing motion of the robot during the predetermined operation,

the plurality of partial trajectories include a first partial trajectory and a second partial trajectory adjacent to each other in the trajectory,

the first partial trajectory and the second partial trajectory include an overlapping portion where the first partial trajectory and the second partial trajectory overlap with each other, a first individual portion only belonging to the first partial trajectory, and a second individual portion only belonging to the second partial trajectory, and

the controller is configured to cause the robot to perform the predetermined operation in the overlapping portion in accordance with both of the first partial trajectory and the second partial trajectory.

2. The control device according to claim 1, wherein the controller is configured to cause

the robot to perform the predetermined operation in the first individual portion in accordance with the first partial trajectory, and

the robot to perform the predetermined operation in the second individual portion in accordance with the second partial trajectory.

3. The control device according to claim 1, further comprising:

an information input interface via which information on the plurality of partial trajectories is input; and

a trainer configured to perform training in machine learning for causing the robot to perform the predetermined operation, in accordance with the plurality of partial trajectories set based on the information input via the information input interface,

wherein the trainer is configured to perform the training in the machine learning in accordance with the first individual portion, the overlapping portion, and the second individual portion, in the first partial trajectory and the second partial trajectory.

4. The control device according to any one of claims 1 to 3, further comprising an information processor configured to control machine learning for causing the robot to perform the predetermined operation,

wherein the information processor is configured to:

cause a display that displays information, to display the trajectory representing the motion of the robot during the predetermined operation;

cause an input interface that receives a user operation, to receive the user operation on the trajectory being displayed on the display to set the plurality of partial trajectories that segment the trajectory; and

control the machine learning to cause the robot to perform the predetermined operation for each of the plurality of partial trajectories, in accordance with set partial trajectories based on the user operation,

the set partial trajectories, as the plurality of partial trajectories that segment the trajectory, have an overlapping portion between partial trajectories that are adjacent to each other in the trajectory, and

the controller is configured to control the robot in accordance with a result of the machine learning controlled by the information processor.

5. An information processing device for controlling machine learning to cause a robot to perform a predetermined operation, the information processing device comprising:

a display configured to display information;

an input interface configured to receive a user operation; and

a controller configured to control the display and the input interface,

wherein the controller is configured to:

cause the display to display a trajectory representing motion of the robot during the predetermined operation;

cause the input interface to receive the user operation on the trajectory being displayed on the display to set a plurality of partial trajectories that segment the trajectory; and

control the machine learning to cause the robot to perform the predetermined operation for each of the plurality of partial trajectories, in accordance with set partial trajectories based on the user operation, and wherein

the set partial trajectories, as the plurality of partial trajectories that segment the trajectory, have an overlapping portion between partial trajectories that are adjacent to each other in the trajectory.

6. The information processing device according to claim 5, wherein the controller is configured to control the machine learning in accordance with the set partial trajectories, to cause the robot to perform a plurality of partial operations respectively corresponding to the set partial trajectories in the predetermined operation.

7. The information processing device according to claim 5, wherein the controller is configured to detect whether the plurality of partial trajectories partially overlap with each other, based on input partial trajectories by the user operation.

8. The information processing device according to claim 7, wherein the controller is configured to sets the plurality of partial trajectories such that each partial trajectory partially overlaps with an adjacent partial trajectory, when the controller detects that the plurality of partial trajectories do not partially overlap with each other.

9. The information processing device according to claim 5, wherein the controller is configured to:

cause the input interface to receive an additional user operation to set a lower limit of an overlap amount indicating a degree by which the plurality of partial trajectories overlap with each other, and
when the overlap amount in the plurality of partial trajectories is less than the lower limit, set the plurality of partial trajectories to increase the overlap amount to the lower limit or more.

10. The information processing device according to claim 5, wherein the controller is configured to:

assign attribute information identifying the plurality of partial trajectories from one another, to each of the set partial trajectories based on the user operation; and
cause the display to display the attribute information assigned to each of the partial trajectories to indicate that a plurality of pieces of the attribute information are assigned to the overlapping portion where the plurality of partial trajectories overlap with each other in the trajectory.

11. The information processing device according to claim 10, wherein the controller is configured to control the machine learning to cause the robot to perform the predetermined operation, in accordance with the attribute information assigned to the plurality of partial trajectories.

12. The information processing device according to claim 10, wherein the controller is configured to:

cause the display to display each of the plurality of partial trajectories in a different manner according to the attribute information assigned to the partial trajectory; and
display, in the overlapping portion where the plurality of partial trajectories overlap with each other, overlapping partial trajectories to be superimposed on one another in a manner according to the attribute information of the respective overlapping partial trajectories.

13. The information processing device according to claim 5, wherein

the display is configured to display a direction of the motion of the robot in the predetermined operation after the machine learning, and
the controller is configured to update display of the direction of the motion on the display as a result of controlling the machine learning in accordance with the set partial trajectories based on the user operation.

14. The information processing device according to claim 5, wherein the controller is configured to acquire, as the trajectory, coordinate data representing the motion of the robot in increments of time, the motion being resultant of direct teaching.

15. The information processing device according to claim 5, wherein the controller is configured to acquire, as the trajectory, coordinate data representing the motion of the robot in increments of time, the motion being resultant of remote control.

16. The information processing device according to claim 5, wherein the controller is configured to display a marker indicating a position where the trajectory satisfies a predetermined condition, on the trajectory displayed on the display, the predetermined condition being associated with a change in an operation of the robot.

17. The information processing device according to claim 5, wherein the controller is configured to:

train, in the machine learning, a control model that controls an operation of the robot, in accordance with the plurality of partial trajectories set based on the user operation; and
cause the control model to output a control command to operate the robot, by sequentially inputting positions or postures at which the robot operates, to cause the robot to perform the predetermined operation.

18. The information processing device according to claim 17, wherein the control command output from the control model includes an average value and a variance value that define a probability distribution of a relative displacement to a target coordinate where the robot is caused to operate at an input position or posture, the control command being output in response to the input position or posture.

19. An information processing method for controlling machine learning to cause a robot to perform a predetermined operation, the information processing method comprising, by a controller of a computer controlling a display that displays information and an input interface that receives a user operation:

causing the display to display a trajectory representing motion of the robot during the predetermined operation;
causing the input interface to receive the user operation on the trajectory being displayed on the display to set a plurality of partial trajectories that segment the trajectory; and
controlling the machine learning to cause the robot to perform the predetermined operation for each of the plurality of partial trajectories, in accordance with set partial trajectories based on the user operation,
wherein the set partial trajectories, as the plurality of partial trajectories that segment the trajectory, have an overlapping portion between partial trajectories that are adjacent to each other in the trajectory.

20. A program for causing the controller of the computer to execute the information processing method according to claim 19.

EP 4 741 114 A1

*Fig. 1*

# Fig. 2

TERMINAL DEVICE (5)

ROBOT (2)
- CONTROLLER (20)
- COMMUNICATION I/F (22)

ROBOT CONTROL DEVICE (4)
- CONTROLLER (40)
- COMMUNICATION I/F (42)
- STORAGE (41)

TERMINAL DEVICE (5)
- DISPLAY (54)
- USER I/F (53)
- CONTROLLER (50)
- COMMUNICATION I/F (52)
- STORAGE (51)
  - TRAJECTORY DATA (D1)
  - ATTRIBUTE INFORMATION (D2)
  - CONTROL MODEL (30)

1

EP 4 741 114 A1

Fig. 3A

Fig. 3B

UPDATE CONTROL MODEL
(W/O SEGMENTING TRAJECTORY)

EP 4 741 114 A1

*Fig. 4*

# Fig. 5

EP 4 741 114 A1

*Fig. 6*

TRAJECTORY SEGMENTATION
PROCESSING (S2) START

S11 | ACQUIRE TRAJECTORY DATA FROM STORAGE

S12 | TRAIN CONTROL MODEL BASED ON TRAJECTORY DATA

S13 | DISPLAY TRAJECTORY OF ROBOT AND ARROW OF MOVING DIRECTION BY CONTROL MODEL

S14 | IS SELECTING OPERATION OF PARTIAL TRAJECTORY INPUT? — NO

YES

S15 | IS FIRST PARTIAL TRAJECTORY BEING SELECTED?

YES

NO

S16 | DO PARTIAL TRAJECTORIES SELECTED LAST TIME AND THIS TIME OVERLAP? — NO

YES

S19 | IS LOWER LIMIT OF OVERLAPPING TIME INPUT? — NO

YES

S20 | EXTEND RESPECTIVE PARTIAL TRAJECTORIES

S17 | DISPLAY SELECTED PARTIAL TRAJECTORY WITH ATTRIBUTE INFORMATION ADDED

S18 | IS SELECTING GIVEN SEGMENTATION NUMBER OF PARTIAL TRAJECTORIES DONE? — NO

YES

S21 | UPDATE CONTROL MODEL BASED ON TRAJECTORY DATA SEGMENTED ACCORDING TO ATTRIBUTE INFORMATION

S22 | DISPLAY TRAJECTORY OF ROBOT AND ARROW OF MOVING DIRECTION BY UPDATED CONTROL MODEL

END

*Fig. 7A*

*Fig. 7B*

*Fig. 8A*

*Fig. 8B*

LOWER LIMIT OF
OVERLAPPING TIME: 0.2 SEC.

Fig. 9

## Fig. 10

```
                    ┌─────────────┐
                    │    START    │
                    └──────┬──────┘
                           │
        ┌──────────────────┴──────────────────┐
   S31  │  CONTROL ROBOT ONLY ACCORDING TO     │
        │     FIRST PARTIAL TRAJECTORY         │
        └──────────────────┬──────────────────┘
                           │
        ┌──────────────────┴──────────────────┐
   S32  │  CONTROL ROBOT ACCORDING TO FIRST    │
        │  AND SECOND PARTIAL TRAJECTORIES     │
        └──────────────────┬──────────────────┘
                           │
        ┌──────────────────┴──────────────────┐
   S33  │  CONTROL ROBOT ONLY ACCORDING TO     │
        │    SECOND PARTIAL TRAJECTORY         │
        └──────────────────┬──────────────────┘
                           │
                    ┌──────┴──────┐
                    │     END     │
                    └─────────────┘
```

Fig. 11

*Fig. 12*

```
        ( TRAJECTORY SEGMENTATION )
        (      PROCESSING START     )
                      │
  S11 ┌──────────────────────────────────┐
      │   ACQUIRE TRAJECTORY DATA FROM    │
      │            STORAGE                │
      └──────────────────────────────────┘
                      │
  S12 ┌──────────────────────────────────┐
      │   TRAIN CONTROL MODEL BASED ON    │
      │         TRAJECTORY DATA           │
      └──────────────────────────────────┘
                      │
  S30 ┌──────────────────────────────────┐
      │  IDENTIFY TEMPORARY STOP TIME OF  │
      │   ROBOT FROM TRAJECTORY DATA      │
      └──────────────────────────────────┘
                      │
 S13A ┌──────────────────────────────────────────┐
      │   DISPLAY TRAJECTORY OF ROBOT, ARROW OF   │
      │ MOVING DIRECTION BY CONTROL MODEL, AND    │
      │              MARKER                       │
      └──────────────────────────────────────────┘
```

S14 — IS SELECTING OPERATION OF PARTIAL TRAJECTORY INPUT? — NO / YES

S15 — IS FIRST PARTIAL TRAJECTORY BEING SELECTED? — YES / NO

S16 — DO PARTIAL TRAJECTORIES SELECTED LAST TIME AND THIS TIME OVERLAP? — NO / YES

S19 — IS LOWER LIMIT OF OVERLAPPING TIME INPUT? — NO / YES

S20 — EXTEND OVERLAPPING PORTION TO LOWER LIMIT OR MORE

S17 — DISPLAY SELECTED PARTIAL TRAJECTORY WITH ATTRIBUTE INFORMATION ADDED

S18 — IS SELECTING GIVEN SEGMENTATION NUMBER OF PARTIAL TRAJECTORIES DONE? — NO / YES

S21 — UPDATE CONTROL MODEL BASED ON TRAJECTORY DATA SEGMENTED ACCORDING TO ATTRIBUTE INFORMATION

S22A — DISPLAY TRAJECTORY OF ROBOT, ARROW OF MOVING DIRECTION BY UPDATED CONTROL MODEL, AND MARKER

( END )

## INTERNATIONAL SEARCH REPORT

| International application No. |
| --- |
| **PCT/JP2024/022660** |

| A. | CLASSIFICATION OF SUBJECT MATTER |
| --- | --- |

*B25J 9/22*(2006.01)i; *G05B 19/42*(2006.01)i; *G05B 19/4155*(2006.01)i
FI:   B25J9/22 A; G05B19/42 D; G05B19/4155 V

According to International Patent Classification (IPC) or to both national classification and IPC

| B. | FIELDS SEARCHED |
| --- | --- |

Minimum documentation searched (classification system followed by classification symbols)

B25J9/22; G05B19/42; G05B19/4155

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2010-067033 A (SONY CORPORATION) 25 March 2010 (2010-03-25) paragraphs [0016], [0025], [0036]-[0056], [0230]-[0232], [0319]-[0336], [0549]-[0556], fig. 1-29 | 1-3 |
| Y | | 4-6, 10-11, 14, 16-17, 19-20 |
| A | | 7-9, 12-13, 15, 18 |
| Y | JP 2019-126861 A (SEIKO EPSON CORPORATION) 01 August 2019 (2019-08-01) paragraphs [0060]-[0064], [0071]-[0072], fig. 7, 11 | 4-6, 10-11, 14, 16-17, 19-20 |
| Y | JP 2005-135095 A (KAWASAKI JUKOGYO KABUSHIKI KAISHA) 26 May 2005 (2005-05-26) paragraphs [0025], [0032]-[0037], [0043], fig. 1-25 | 4-6, 10-11, 14, 16-17, 19-20 |
| A | JP 09-297611 A (NIPPON TELEGRAPH AND TELEPHONE CORPORATION) 18 November 1997 (1997-11-18) entire text, all drawings | 1-20 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 August 2024** | **03 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/022660**

| | C. DOCUMENTS CONSIDERED TO BE RELEVANT | |
|---|---|---|
| Category* | Citation of document, with indication, where appropriate, of the relevant passages | Relevant to claim No. |
| A | WO 2018/042704 A1 (MITSUBISHI ELECTRIC CORPORATION) 08 March 2018 (2018-03-08)<br>entire text, all drawings | 1-20 |
| A | US 2020/0230817 A1 (DOOSAN ROBOTICS INC.) 23 July 2020 (2020-07-23)<br>entire text, all drawings | 1-20 |

Form PCT/ISA/210 (second sheet) (July 2022)

**INTERNATIONAL SEARCH REPORT**
Information on patent family members

International application No.

**PCT/JP2024/022660**

| Patent document cited in search report | | | Publication date (day/month/year) | Patent family member(s) | | Publication date (day/month/year) |
|---|---|---|---|---|---|---|
| JP | 2010-067033 | A | 25 March 2010 | (Family: none) | | |
| JP | 2019-126861 | A | 01 August 2019 | US 2019/0224842 A1 paragraphs [0072]-[0076], [0083]-[0084], fig. 7, 11 | | |
| JP | 2005-135095 | A | 26 May 2005 | (Family: none) | | |
| JP | 09-297611 | A | 18 November 1997 | (Family: none) | | |
| WO | 2018/042704 | A1 | 08 March 2018 | US 2020/0183359 A1 entire text, all drawings DE 112017004424 T5 CN 109643102 A | | |
| US | 2020/0230817 | A1 | 23 July 2020 | WO 2018/143607 A1 EP 3579100 A1 KR 10-2018-0090623 A | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016103307 A

**Non-patent literature cited in the description**

- **G. FRANZESE** ; **A. MESZAROS** ; **L. PETERNEL** ; **J. KOBER**. ILoSA: Interactive learning of stiffness and attractors. *IROS*, 2021